# EUROPEAN PATENT APPLICATION

(11) **EP 1 930 749 A1**
(43) Date of publication of application: **11.06.2008**
(21) Application number: 06796949.3
(22) Date of filing: 29.08.2006
(51) Int. Cl.: G02B 5/30, B32B 7/02, B32B 27/00, G02F 1/1335, G02F 1/13363

(54) **OPTICAL FILM, POLARIZING PLATE, AND LIQUID CRYSTAL DISPLAY DEVICE**

(30) Priority: 02.09.2005 JP 2005254934
(71) Applicant: JSR Corporation, Tokyo 104-0045 (JP)
(72) Inventor: TANAKA, Kei, Tokyo 104-0045 (JP); USHINO, Takuhiro, Tokyo 104-0045 (JP); SEKIGUCHI, Masayuki, Tokyo 104-0045 (JP)
(74) Representative: TBK-Patent
(86) International application number: PCT/JP2006/316970
(87) International publication number: WO 2007/026694

(57) **Abstract**

An optical film has a film a formed of a cyclic olefin resin, and a homeotropically orientated optical anisotropic layer b disposed on the film a. This optical film preferably satisfies the below listed formulae (1) to (3).
(1) -600 nm≦ Rth≦ 200 nm
(2) 0 nm≦ R≦ 600 nm
(3) NZ≦ 1

(In formulae (1) to (3), Rth indicates the retardation in the thickness direction of the optical film at a wavelength of 550 nm; R indicates the in-plane retardation of the optical film at a wavelength of 550 nm; and NZ indicates (nx - nz)/(nx-ny)).
When the optical film is used in an ISP mode liquid crystal display device, light leakage and color fading (discoloration) during black display are prevented stably for a long term, and a good viewing angle compensation effect is obtained (i.e., high contrast ratio at all angles).

## Description

### Field of Technology

The present invention relates to an optical film, a polarizing plate, and a liquid crystal display device. More specifically, the present invention relates to an optical film capable of use as a viewing angle compensation film of an in-plane switching (IPS) mode liquid crystal display device, a polarizing plate having this optical film, and a liquid crystal display device having this optical film or polarizing plate.

### Background Technology

Since liquid crystal display devices have the advantages of low electrical power consumption and extremely thin and compact size, these devices are used in various types of products such as cellular phones, notebook personal computers, car navigation systems, liquid crystal display televisions, and the like. Among these applications, liquid crystal display televisions with a transmissive liquid crystal display have an anticipated demand and, in accompaniment with size increase of the display, demands have increased for cost reduction and high resolution display with high brightness at wide viewing angles.

In order to respond to such requirements, a liquid crystal display device is proposed using the IPS mode in which the direction of the electrical field applied to the liquid crystal is parallel to the substrate. The conventional IPS mode liquid crystal display device has a wide viewing angle and provides a high contrast when seen from front or from altitudinal and azimuthal angles. However, the display device has problems in that light leakage occurs during black display and thus the contrast is lowered due to the leakage of light when the screen is viewed from an azimuthal angle of 45 degrees because of the angle relative to the absorption axis of the pair of polarizing plates being non-perpendicular.

Patent Document 1 proposes a liquid crystal display device which uses an optical compensation film which has a lagging axis parallel or perpendicular to the light transmission axis of the polarizing plate. According to this, it can be seen that, by the use of an optical compensation film having a high refractive index in the thickness direction (i.e., having small retardation in the thickness direction) , it is possible to improve viewing angle characteristics without lowering front-direction characteristics (i.e., it is possible to prevent light leakage when black is displayed and when the screen is viewed from oblique angles). However, even though Patent Document 1 discloses the retardation of the polarizing plate or optical compensation film, it does not disclose a method for obtaining this type of polarizing plate or optical compensation film (in particular, optical compensation film having small retardation in the thickness direction).

It is difficult to obtain such optical film of high refractive index in the thickness direction by the normal stretching method, and a special stretching method has been necessary wherein a heat-shrinkable film is used which is contracted in the in-plane direction and expanded in the thickness direction at the same time. However, this special stretching method has a high difficulty level, and has not been suitable for industrial use.

Patent Document 2 discloses an optical laminate that includes a transparent retarder plate containing a cycloolefin type compound and an optical anisotropic layer containing a liquid crystal compound. Patent Document 3 discloses a wide band 1/4 wavelength plate (and a display device utilizing this) which has an optical anisotropic film formed by stretching a thermoplastic resin film and an optical anisotropic layer being an immobilized film of a liquid crystal compound. However, these Patent Documents do not disclose refraction properties of the optical substrate in the thickness direction.

Patent Document 4 discloses an optical anisotropic layer of a liquid crystal compound which is homeotropically oriented and cured. However, since the utilized substrate is glass, free control of retardation is difficult and manufacturing efficiency is poor in comparison with films which can be handled as rolls. Thus, this layer has been unsuitable for use as an optical anisotropic layer for viewing angle compensation.
[Patent Document 1] Japanese Patent Application Laid-Open No. 11-305217.
[Patent Document 2] Japanese Patent Application Laid-Open No. 2003-195041.
[Patent Document 3] Japanese Patent Application Laid-Open No. 2004-226686.
[Patent Document 4] Japanese Patent Application Laid-Open No. 2005-165240.

### Disclosure of the Invention

### Problems to be Solved by the Invention

Objects of the present invention are to solve the above-mentioned problems which are associated with the conventional technology, and to provide an optical film which has a good viewing angle compensation effect (i.e. capable of achieving a high contrast ratio at all angles and the like) and which stably prevents light leakage and color fading (discoloration) during black display over a long time period when used in an ISP mode liquid crystal display device. Another object of the present invention is to provide a polarizing plate having this optical film, and a liquid crystal display device having this optical film or polarizing plate.

### Means to Solve the Problems

As a result of the dedicated research that has been made to solve the above-mentioned problems, the present inventors have reached completion of the present invention through the discovery that a viewing angle compensation film can be obtained which has a large refractive index in the thickness direction by forming an optical anisotropic layer having homeotropic orientation on top of a film formed from a cyclic olefin type resin.

That is, an optical film according to the present invention comprises a film a comprising a cyclic olefin type resin and an optical anisotropic layer b having homeotropic orientation provided on the film a.

The above-mentioned optical film preferably satisfies the below listed formulae (1) to (3).
(1) -600 nm≦Rth≦ 200 nm
(2) 0 nm≦R≦ 600 nm
(3) NZ≦ 1
In formulae (1) to (3), Rth indicates the retardation in the thickness direction of the optical film at a wavelength of 550 nm and is expressed by Rth = [(nx + ny) /2 - nz] × d; R indicates the in-plane retardation of the optical film at a wavelength of 550 nm and is expressed by R = (nx - ny) × d; NZ is expressed by (nx - nz) / (nx - ny) ; nx is the film in-plane maximum refractive index; ny is the refractive index in the film in-plane direction perpendicular to nx; nz is the refractive index in the film thickness direction perpendicular to nx and ny; and d is film thickness (nm).

For the above-mentioned optical film,
(i) the above-mentioned cyclic olefin type resin (100 mol% total constituent unit basis) preferably contains 30 to 100 mol% of constituent units indicated by the below listed formula (I) and 0 to 70 mol% of constituent units indicated by the below listed formula (II); and
(ii) the thickness of the above-mentioned film a is preferably 10,000 nm to 200,000 nm.

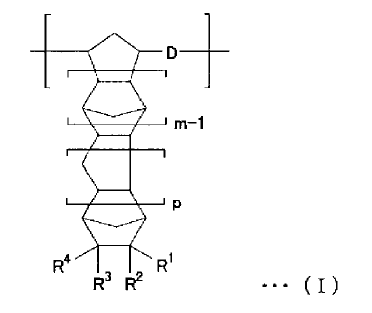

In formula (I), m is an integer which is 1 or more; p is an integer which is 0 or 1 or more; D indicates a group independently represented by -CH=CH- or -CH₂CH₂-; R¹ to R⁴ each indicate a hydrogen atom, halogen atom, polar group, or a hydrocarbon group (optionally having a coupling group containing an oxygen atom, sulfur atom, nitrogen atom, or silicon atom) which is optionally substituted or not substituted and has 1 to 30 carbon atoms; R¹ and R² and/or R³ and R⁴ may be combined to form a bivalent hydrocarbon group; R¹ or R², and R³ or R⁴ may be mutually bonded to form a carbon ring or a heterocyclic ring; and this carbon ring or heterocyclic ring may have either a monocyclic structure or a polycyclic structure.

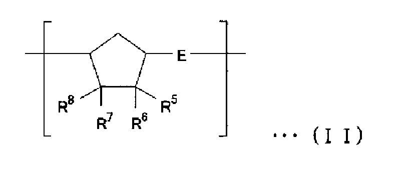

In formula (II), E indicates a group independently represented by -CH=CH- or -CH₂CH₂-; R⁵ to R⁸ each indicate a hydrogen atom, halogen atom, polar group, or a hydrocarbon group (optionally having a coupling group containing an oxygen atom, sulfur atom, nitrogen atom, or silicon atom) which is optionally substituted or not substituted and has 1 to 30 carbon atoms; R⁵ and R⁶ and/or R⁷ and R⁸ may be combined to form a bivalent hydrocarbon group; R⁵ or R⁶, and R⁷ or R⁸ may be mutually bonded to form a carbon ring or a heterocyclic ring; and this carbon ring or heterocyclic ring may have either a monocyclic structure or a polycyclic structure.

The above-mentioned film a preferably satisfies the below listed formulae (4) and (5).
(4) 0 nm ≦ Rₐth ≦ 600 nm
(5) 0 nm ≦ Rₐ ≦ 600 nm
In formulae (4) and (5), Rₐth indicates the retardation in the thickness direction of the film a at a wavelength of 550 nm and is expressed by Rₐth = [(nxₐ+nyₐ)/2 - nzₐ] × dₐ; Rₐ indicates the in-plane retardation of the film a at a wavelength of 550 nm and is expressed by Rₐ = (nxₐ - nyₐ) × dₐ; nxₐ is the film a in-plane maximum refractive index; nyₐ is the refractive index in the film a in-plane direction perpendicular to nxₐ; nzₐ is the refractive index in the film a thickness direction perpendicular to nxₐ and nyₐ; and dₐ is film a thickness (nm).

The above-mentioned optical anisotropic layer b preferably satisfies the below listed formulae (6) and (7).
(6) -1000 nm≦ R_{b}th ≦ 0 nm
(7) 0 nm ≦ R_{b} ≦ 50 nm
In formulae (6) and (7), R_{b}th indicates the retardation in the thickness direction of the optical anisotropic layer b at a wavelength of 550 nm and is expressed by R_{b}th = [(nx_{b} + ny_{b})/2 -nz_{b}] × d_{b}; R_{b} indicates the in-plane retardation of the optical anisotropic layer b at a wavelength of 550 nm and is expressed by R_{b} = (nx_{b} - ny_{b}) × d_{b}; nx_{b} is the optical anisotropic layer b in-plane maximum refractive index; ny_{b} is the refractive index in the optical anisotropic layer b in-plane direction perpendicular to nx_{b}; nz_{b} is the refractive index in the optical anisotropic layer b thickness direction perpendicular to nx_{b} and ny_{b}; and d_{b} is optical anisotropic layer b thickness (nm).

The above-mentioned optical anisotropic layer b is preferably formed by applying a liquid crystal compound on the above-mentioned film a. Also preferably, the optical anisotropic layer b is transferred to the above-mentioned film a, and is bonded and laminated thereon through an adhesive film layer d.

The optical film preferably has a thin film layer c between the film a and the optical anisotropic layer b.

A polarizing plate and a liquid crystal display device of the present invention have the optical film. The liquid crystal display device of the present invention also preferably has the polarizing plate; and the driving method for liquid crystal cells is preferably in-plane switching (IPS) method.

### Effect of the Invention

According to the present invention, an optical film can be obtained which has a high refractive index in the thickness direction while maintaining characteristics of the conventional cyclic olefin type resin films, i.e., optical characteristics such as high transparency and low birefringence, uniform and stable generation of retardation after stretching and orientation, and the like; heat resistance; and adhesion and bonding properties with other materials. By the use of this optical film which has a high refractive index in the thickness direction, the obtainable IPS mode liquid crystal display device can prevent the leakage of light therefrom when viewed from an angle, thereby can achieve a high contrast ratio, and can provide a superior and stable viewing angle compensation effect.

### Preferred Embodiments for Carrying Out the Invention

The optical film, polarizing plate, and liquid crystal display device according to the present invention are explained below in detail.

### [Optical Film]

### <Structure and Optical Characteristics>

The optical film according to the present invention has a film a formed of a cyclic olefin type resin, and an optical anisotropic layer b disposed on the film a and having homeotropic orientation. The above-mentioned optical film of the present invention preferably satisfies the following formulae (1) to (3).
(1) -600 nm ≦ Rth ≦ 200 nm
(2) 0 nm ≦ R ≦ 600 nm
(3) NZ ≦ 1
   In formulae (1) to (3), Rth indicates the retardation in the thickness direction of the optical film at a wavelength of 550 nm and is expressed by Rth = [(nx + ny) /2 - nz] × d; R indicates the in-plane retardation of the optical film at a wavelength of 550 nm and is expressed by R = (nx - ny) × d; NZ indicates (nx - nz) / (nx - ny) ; nx is the film in-plane maximum refractive index; ny is the refractive index in the film in-plane direction perpendicular to nx; nz is the refractive index in the film thickness direction perpendicular to nx and ny; and d is the film thickness (nm).

When the film a formed of cyclic olefin type resin of the optical film of the present invention is not stretched, as indicated by the above-mentioned formula (1), Rth is within the range of -600 nm to 200 nm, preferably within the range of -500 nm to 100 nm, and more preferably within the range of -400 nm to 50 nm; and as indicated by the above-mentioned formula (2), R is within the range of 0 nm to 600 nm, preferably within the range of 0 nm to 100 nm, and more preferably within the range of 0 nm to 50 nm; and as indicated by the above-mentioned formula (3), NZ is not more than 1, preferably is not more than 0.3, and more preferably is not more than 0. When the film a formed of cyclic olefin type resin is stretched, as indicated by the above-mentioned formula (1), Rth is within the range of -600 nm to 200 nm, preferably within the range of -500 nm to 150 nm, and more preferably within the range of -400 nm to 100 nm; and as indicated by the above-mentioned formula (2), R is within the range of 0 nm to 600 nm, preferably within the range of 50 nm to 500 nm, and more preferably within the range of 100 nm to 400 nm; and as indicated by the above mentioned formula (3), NZ is not more than 1, preferably is from -1 to 0.9, and more preferably is from -0.8 to 0.8. When the above conditions are satisfied, particularly in an IPS mode liquid crystal display device, light leakage from the liquid crystal display device can be prevented when the device is viewed from oblique angles, and a high contrast ratio can be obtained.

### <Film a>

The film a constituting the optical film of the present invention is formed of a cyclic olefin type resin, and preferably satisfies the below listed formulae (4) and (5).
(4) 0 nm ≦ Rₐth ≦ 600 nm
(5) 0 nm ≦ Rₐ ≦ 600 nm
In formulae (4) and (5), Rₐth indicates the retardation in the thickness direction of the film a at a wavelength of 550 nm and is expressed by Rₐth = [(nxₐ+nyₐ)/2-nzₐ] × dₐ; Rₐ indicates the in-plane retardation of the film a at a wavelength of 550 nm and is expressed by Rₐ = (nxₐ - nyₐ) × dₐ; nxₐ is the film a in-plane maximum refractive index; nyₐ is the refractive index in the film a in-plane direction perpendicular to nxₐ; nzₐ is the refractive index in the film a thickness direction perpendicular to nxₐ and nyₐ; and dₐ is the film a thickness (nm).

When the film a is not stretched, as indicated by the formula (4), Rₐth is within the range of 0 nm to 600 nm, preferably within the range of 0 nm to 150 nm, and more preferably within the range of 0 nm to 100 nm; and as indicated by the formula (5), Rₐ is within the range of 0 nm to 600 nm, preferably within the range of 0 nm to 50 nm, and more preferably within the range of 0 nm to 20 nm. When the film a is stretched, as indicated by the formula (4), Rₐth is within the range of 0 nm to 600 nm, preferably within the range of 30 nm to 500 nm, and more preferably within the range of 50 nm to 400 nm; and as indicated by the formula (5), Rₐ is within the range of 0 nm to 600 nm, preferably within the range of 50 nm to 500 nm, and more preferably within the range of 100 nm to 400 nm. By making proper use of the stretched film a or the non-stretched film a, optical properties, i.e., optical characteristics of the film a and the optical anisotropic layer b in combination, can be controlled widely and delicately, and an excellent viewing angle compensation effect can be obtained particularly in an IPS mode liquid crystal display device.

Regardless of whether the film is stretched or not, the thickness of the film a is 10,000 nm to 200,000 nm, preferably is 30, 000 nm to 100, 000 nm, and particularly preferably is 40, 000 nm to 70,000 nm from the standpoint of the thinning of liquid crystal panel.

The cyclic olefin type resin that forms the film a preferably contains 30 to 100 mol% of constituent units indicated by the below listed formula (I) (referred to hereinafter as the constituent units (I)) and 0 to 70 mol% of constituent units indicated by the below listed formula (II) (referred to hereinafter as the constituent units (II)), wherein the total of constituent units of the cyclic olefin type resin is 100 mol%. When this condition is satisfied, the obtainable optical film has good optical characteristics such as high transparency, low birefringence, uniform and stable generation of retardation after stretching and orientation, and the like; has excellent heat resistance, adhesion and bonding properties with other materials, and the like; and has a small moisture-induced deformation.

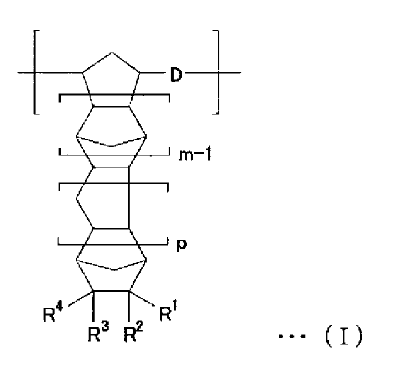

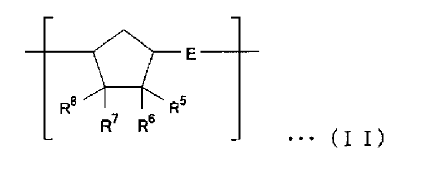

In the above-mentioned formula (I), m is an integer of 1 or greater; and p is an integer which is 0 or 1 or greater.

Also, in the above-mentioned formulae (I) and (II), D and E each indicate a group expressed by -CH=CH- or -CH₂CH₂-.

R¹ to R⁸ each indicate a hydrogen atom, a halogen atom such as fluorine, chlorine or bromine atom, a polar group, or a hydrocarbon group (optionally having a coupling group containing an oxygen atom, sulfur atom, nitrogen atom, or silicon atom) which is substituted or not substituted and has 1 to 30 carbon atoms.

The hydrocarbon groups with 1 to 30 carbon atoms include:
alkyl groups such as a methyl group, ethyl group, propyl group, and the like; cycloalkyl groups such as a cyclopentyl group, cyclohexyl group, and the like; and alkenyl groups such as a vinyl group, allyl group, propenyl group, and the like. Also, the hydrocarbon groups may be bonded to the ring structure directly or through a linkage group (linkage).

Such linkage groups include: bivalent hydrocarbon groups of 1 to 10 carbon atoms (such as alkylene groups represented by -(CH₂)ₖ- where k is an integer ranging from 1 to 10); and linkage groups containing oxygen, nitrogen, sulfur or silicon (such as a carbonyl group (-CO- ), oxycarbonyl group (-O(CO)-), sulfone group (-SO₂-), ether bond (-O-), thioether bond (-S-) , imino group (-NH-), amide bond (-NHCO-, -CONH-), and siloxane bond (-OSi(R₂)-(where R is an alkyl group such as methyl, ethyl, or the like)). A plurality of these linkage groups may be present.

R¹ and R², and/or R³ and R⁴ may be combined to form a bivalent hydrocarbon group; R¹ or R², and R³ or R⁴ may be mutually bonded to form a carbon ring or a heterocyclic ring; and this carbon ring or heterocyclic ring may have either a monocyclic structure or a polycyclic structure. The same applies to R⁵ to R⁸.

The above-mentioned polar groups include: a hydroxyl group, alkoxy groups of 1 to 10 carbon atoms (such as a methoxy group, ethoxy group, and the like), alkoxycarbonyl groups (such as a methoxycarbonyl group, ethoxycarbonyl group, and the like), aryloxycarbonyl groups (such as a phenoxycarbonyl group, naphthyloxycarbonyl group, fluorenyloxycarbonyl group, biphenylyloxycarbonyl group, and the like), cyano group, amide group, imide ring-containing groups, triorganosiloxy groups (such as a trimethylsiloxy group, triethylsiloxy group, and the like), triorganosilyl groups (such as a trimethylsilyl group, triethylsilyl group, and the like), amino groups (such as a primary amino group and the like), acyl group, alkoxysilyl groups (such as a trimethoxysilyl group, triethoxysilyl group, and the like), sulfonyl-containing groups, a carboxyl group, and the like.

Preferred embodiments of the above-mentioned cyclic olefin type resin for use in the present invention include:
Resins formed of 100 mol% of the above-mentioned constituent units (I);
Resins formed (based on 100 mol% of total constituent units of the cyclic olefin type resin) of 50 to 95 mol% of the above-mentioned constituent units (I) and 5 to 50 mol% of the above-mentioned constituent units (II); wherein R¹ and R² in the above-mentioned formula (I) are each a hydrogen atom, R³ is a methyl group, R⁴ is a methoxycarbonyl group, m = 1, and p = 0; and in the above-mentioned formula (II), R⁵ to R⁸ each indicate a hydrogen atom or a hydrocarbon group; and
Resins formed (based on 100 mol% of total constituent units of the cyclic olefin type resin) of 50 to 95 mol% of the above-mentioned constituent units (I) and 5 to 50 mol% of the above-mentioned constituent units (II); wherein R¹ and R² in the above-mentioned formula (I) are each a hydrogen atom, R³ is a methyl group, R⁴ is a methoxycarbonyl group, m = 1, and p = 0; and in the above-mentioned formula (II), R⁵ or R⁶, and R⁷ or R⁸ each indicate a hydrogen atom and the other groups of R⁵ to R⁸ are mutually bonded together to form a bivalent linear hydrocarbon group of 3 carbon atoms.

Examples of monomers capable of forming the above-mentioned constituent units (I) include those represented by the below listed general formula (I').

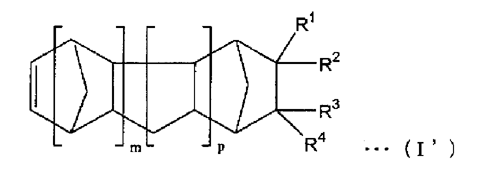

In the above-mentioned formula (I'), m, p, and R¹ to R⁴ are the same as m, p, and R¹ to R⁴ in the above-mentioned formula (I).

Although specific examples of the monomers (hereinafter referred to as the monomers (I')) are described below, the present invention is not limited to these specific examples. The below listed monomers (I' ) can be used singly or two or more kinds may be used in combination.

Specific examples of the monomers (I') include:
tetracyclo [4.4.0.1^{2,5}.1^{7,10}]-3-dodecene,
pentacyclo [6.5.1.1^{3,6}.0^{2,7}.0^{9,13}]-4-pentadecene,
pentacyclo [7.4.0.1^{2,5}.1^{9,12}.0^{8,13}]-3-pentadecene,
8-methoxycarbonyltetracyclo [4.4.0.1^{2,5}.1^{7,10}]-3-dodecene,
8-ethoxycarbonyltetracyclo [4.4.0.1^{2,5}.1^{7,10}] -3-dodecene,
8-n-propoxycarbonyltetracyclo [4.4.0.1^{2,5}.1^{7,10}]-3-dodecene,
8-isopropoxycarbonyltetracyclo [4.4.0.1^{2,5}.1^{7,10}]-3-dodecene,
8-n-butoxycarbonyltetracyclo [4.4.0.1^{2,5}.1^{7,10}]-3-dodecene,
8-phenoxycarbonyltetracyclo [4.4.0.1^{2,5}.1^{7,10}]-3-dodecene,
8-methyl-8-methoxycarbonyltetracyclo [4.4.0.1^{2,5}.1^{7,10}] -3-dodecene,
8-methyl-8-ethoxycarbonyltetracyclo [4.4.0.1^{2,5}.1^{7,10}]-3-dodecene,
8-methyl-8-n-propoxycarbonyltetracyclo [4.4.0.1^{2,5}.1^{7,10}]-3-dodecene,
8-methyl-8-isopropoxycarbonyltetracyclo [4.4.0.1^{2,5}.1^{7,10}]-3-dodecene,
8-methyl-8-n-butoxycarbonyltetracyclo [4.4.0.1^{2,5}.1^{7,10}]-3-dodecene,
8-methyl-8-phenoxycarbonyltetracyclo [4.4.0.1^{2,5}.1^{7,10}] -3-dodecene,
pentacyclo [8.4.0.1^{2,5}.1^{9,12}.0^{8,13}]-3-hexadecene, heptacyclo [8.7.0.1^{3,6}.1^{10,17}.1^{12,15}.0^{2,7}.0^{11,16}]-4-eicosene,
heptacyclo [8.8.0.1^{4,7}.1^{11,18}.1^{13,16}.0^{3,8}.0^{12,17}]-5-heneicosene,
8-ethylidenetetracyclo [4.4.0.1^{2,5}.1^{7,10}]-3-dodecene,
8-phenyltetracyclo [4.4.0.1^{2,5}.1^{7,10}]-3-dodecene,
8-methyl-8-phenyltetracyclo [4.4.0.1^{2,5}.1^{7,10}]-3-dodecene,
8-fluorotetracyclo [4.4.0.1^{2,5}.1^{7,10}]-3-dodecene,
8-fluoromethyltetracyclo [4.4.0.1^{2,5}.1^{7,10}]-3-dodecene,
8-difluoromethyltetracyclo [4.4.0.1^{2,5}.1^{7,10}]-3-dodecene,
8-trifluoromethyltetracyclo [4.4.0.1^{2,5}.1^{7,10}]-3-dodecene,
8-pentafluoroethyltetracyclo [4.4.0.1^{2,5}.1^{7,10}]-3-dodecene,
8, 8-difluorotetracyclo [4.4.0.1^{2,5}.1^{7,10}]-3-dodecene,
8,9-difluorotetracyclo [4.4.0.1^{2,5}.1^{7,10}]-3-dodecene,
8,8-bis(trifluoromethyl)tetracyclo [4.4.0.1^{2,5}.1^{7,10}]-3-dodecene,
8,9-bis(trifluoromethyl)tetracyclo [4.4.0.1^{2,5}.1^{7,10}]-3-dodecene,
8-methyl-8-trifluoromethyltetracyclo [4.4.0.1^{2,5}.1^{7,10}]-3-dodecene,
8,8,9-trifluorotetracyclo [4.4.0.1^{2,5}.1^{7,10}]-3-dodecene,
8,8,9-tris(trifluoromethyl)tetracyclo [4.4.0.1^{2,5}.1^{7,10}]-3-dodecene,
8,8,9,9-tetrafluorotetracyclo [4.4.0.1^{2,5}.1^{7,10}]-3-dodecene,
8,8,9,9-tetrakis(trifluoromethyl)tetracyclo [4.4.0.1^{2.5}1^{7,10}]-3-dodecene,
8,8-difluoro-9,9-bis(trifluoromethyl)tetracyclo [4.4.0.1^{2,5}.1^{7,10}]-3-dodecene,
8,9-difluoro-8,9-bis(trifluoromethyl)tetracyclo [4.4.0.1^{2,5}.1^{7,10}]-3-dodecene,
8,8,9-trifluoro-9-trifluoromethyltetracyclo [4.4.0.1^{2,5}.1^{7,10}]-3-dodecene,
8,8,9-trifluoro-9-trifluoromethoxytetracyclo [4.4.0.1^{2,5}.1^{7,10}]-3-dodecene,
8,8,9-trifluoro-9-pentafluoropropoxytetracyclo [4.4.0.1^{2,5}.^{17,10}]-3-dodecene,
8-fluoro-8-pentafluoroethyl-9,9-bis(trifluoromethyl)tet racyclo [4.4.0.1^{2,5}.1^{7,10}]-3-dodecene,
8,9-difluoro-8-heptafluoroiso-propyl-9-trifluoromethylt etracyclo [4.4.0.1^{2,5}.1^{7,10}]-3-dodecene,
8-chloro-8,9,9-trifluorotetracyclo [4.4.0.1^{2,5}.1^{7,10}]-3-dodecene,
8,9-dichloro-8,9-bis(trifluoromethyl)tetracyclo [4.4.0.1^{2,5}.1^{7,10}]-3-dodecene,
8-(2,2,2-trifluoroethoxycarbonyl)tetracyclo [4.4.0.1^{2,5}.1^{7,10}]-3-dodecene,
8-methyl-8-(2,2,2-trifluoroethoxycarbonyl)tetracyclo [4.4.0.1^{2,5}.1^{7,10}]-3-dodecene, and the like.

Among the above-mentioned specific examples, 8-methyl-8-methoxycarbonyltetracyclo [4.4.0.12,^{5.1}.1^{7,10}]-3-dodecene is preferred because such use increases the glass transition temperature of the obtainable copolymer, and adverse influences such as deformation by moisture absorption and the like can be substantially avoided while maintaining the moisture absorption to such an extent that good adhesion and bonding properties with other materials are ensured.

Examples of monomers capable of forming the above-mentioned structural units (II) include those represented by the below mentioned general formula (II').

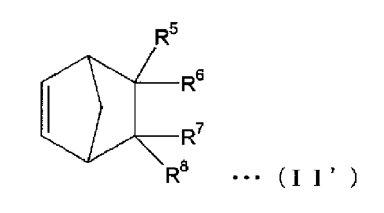

In the above-mentioned formula (II'), R⁵ to R⁸ are the same as R⁵ to R⁸ in the above-mentioned formula (II).

Although specific examples of the monomers (hereinafter referred to as the monomers (II')) are described below, the present invention is not limited to these specific examples. The below listed monomers (II') can be used singly or two or more kinds may be used in combination.

Specific examples of the above-mentioned monomers (II') include:
bicyclo [2.2.1]hept-2-ene,
tricyclo [4.3.0.1^{2,5}]-3-decene,
tricyclo [4.3.0.1^{2,5}]-deca-3,7-diene,
tricyclo [4.4.0.1^{2,5}]-3-undecene,
5-methylbicyclo [2.2.1]hept-2-ene,
5-ethylbicyclo [2.2.1]hept-2-ene,
5-methoxycarbonylbicyclo [2.2.1]hept-2-ene,
5-methyl-5-methoxycarbonylbicyclo [2.2.1]hept-2-ene,
5-phenoxycarbonylbicyclo [2.2.1]hept-2-ene,
5-methyl-5-phenoxycarbonylbicyclo [2.2.1]hept-2-ene,
5-cyanobicyclo [2.2.1]hept-2-ene,
5-ethylidenebicyclo [2.2.1]hept-2-ene,
5-phenylbicyclo [2.2.1]hept-2-ene,
5-naphthylbicyclo [2.2.1]hept-2-ene (both α and β types are possible),
5-fluorobicyclo [2.2.1]hept-2-ene,
5-fluoromethylbicyclo [2.2.1]hept-2-ene,
5-trifluoromethylbicyclo [2.2.1]hept-2-ene,
5-pentafluoroethylbicyclo [2.2.1]hept-2-ene,
5,5-difluorobicyclo [2.2.1]hept-2-ene,
5,6-difluorobicyclo [2.2.1]hept-2-ene,
5,5-bis(trifluoromethyl)bicyclo [2.2.1]hept-2-ene,
5,6-bis(trifluoromethyl)bicyclo [2.2.1]hept-2-ene,
5-methyl-5-trifluoromethylbicyclo [2.2.1]hept-2-ene,
5,5,6-trifluorobicyclo [2.2.1]hept-2-ene,
5,5,6-tris(fluoromethyl)bicyclo [2.2.1]hept-2-ene,
5,5,6,6-tetrafluorobicyclo [2.2.1]hept-2-ene,
5,5,6,6-tetrakis(trifluoromethyl)bicyclo [2.2.1]hept-2-ene,
5,5-difluoro-6,6-bis(trifluoromethyl)bicyclo [2.2.1]hept-2-ene,
5,6-difluoro-5,6-bis(trifluoromethyl)bicyclo [2.2.1]hept-2-ene,
5,5,6-trifluoro-5-trifluoromethylbicyclo [2.2.1]hept-2-ene,
5-fluoro-5-pentafluoroethyl-6,6-bis(trifluoromethyl)bic yclo [2.2.1]hept-2-ene,
5,6-difluoro-5-heptafluoro-iso-propyl-6-trifluoromethyl bicyclo [2.2.1]hept-2-ene,
5-chloro-5,6,6-trifluorobicyclo [2.2.1]hept-2-ene,
5,6-dichloro-5,6-bis(trifluoromethyl)bicyclo [2.2.1]hept-2-ene,
5,5,6-trifluoro-6-trifluoromethoxybicyclo [2.2.1]hept-2-ene,
5,5,6-trifluoro-6-heptafluoropropoxybicyclo [2.2.1]hept-2-ene,
5-(4-phenylphenyl)bicyclo [2.2.1]hept-2-ene,
4-(bicyclo [2.2.1]hept-5-en-2-yl)phenylsulfonyl benzene, and the like.

Among these monomers, referring to R⁵ to R⁸ of general formula (II'), the following monomers are preferable from the standpoint of greater effect to improve toughness and heat resistance of the obtainable optical film: monomers in which these substituents are all hydrogen atoms; monomers in which any one of these substituents is a hydrocarbon group having 1 to 30 carbon atoms and the others are hydrogen atoms; and monomers in which any two of these substituents are linked through an alkylene group having 3 to 5 carbon atoms. In particular, from the standpoint of heat resistance, preferred are monomers in which R⁵ to R⁸ are all hydrogen atoms; monomers in which any one of these substituents is a methyl group, ethyl group, or phenyl group while the other groups are all hydrogen atoms; and monomers in which R⁵ or R⁶, and R⁷ or R⁸ are hydrogen atoms, and the other groups of R⁵ to R⁸ are mutually bonded together to form a bivalent linear hydrocarbon group of 3 to 5 carbon atoms. Furthermore, bicyclo [2.2.1]hept-2-ene, 5-phenylbicyclo [2.2.1]hept-2-ene, tricyclo [4.3.0.1^{2,5}]-3-decene, and tricyclo [4.3.0.1^{2,5}]-deca-3,7-diene are preferred since the synthesis of such monomers is easy.

The above-mentioned cyclic olefin type resin can be obtained through publicly known methods (such as the method described in Japanese Patent Application Laid-Open No. 2003-14901) by ring opening (co)polymerization of the above-mentioned monomer (I') and, as may be required, the monomer (II'). Moreover, the copolymerization may involve a monomer other than the above-mentioned monomers (I') and (II'), e.g., a cycloolefin such as cyclobutene, cyclopentene, cycloheptene, cyclooctene, or the like. A hydrogenation product of the thus-obtained ring opening (co)polymer may also be used as the cyclic olefin type resin.

The inherent viscosity of the above-mentioned cyclic olefin type resin in chloroform (30°C) is 0.2 to 5 dl/g, preferably is 0.3 to 4 dl/g, and particularly preferably is 0.5 to 3 dl/g. When the above-mentioned range is exceeded, the solution viscosity becomes excessively high, and the processability may be deteriorated. Below the above-mentioned range, there are instances that the film strength is lowered.

For molecular weight of the above-mentioned cyclic olefin type resin as measured by gel permeation chromatography (GPC, columns: (manufactured by Tosoh Corp.) four columns in series: TSK gel G7000H_{XL} × 1, TSK gel GMH_{XL} × 2, and TSK gel G2000H_{XL} × 1, solvent: tetrahydrofuran), the polystyrene-equivalent number average molecular weight (Mn) is normally within the range of 8,000 to 1,000,000, preferably is 10,000 to 500,000, and particularly preferably is 20,000 to 100,000. Moreover, the polystyrene-equivalent weight average molecular weight (Mw) is normally within the range of 20,000 to 3,000,000, preferably is 30,000 to 100,0000, and particularly preferably is 40,000 to 500,000. Also, the molecular weight distribution Mw/Mn is normally 1.5 to 10, preferably is 2 to 8, and particularly preferably is 2.5 to 5.

The saturated moisture absorption at 23°C of the above-mentioned cyclic olefin type resin is normally not more than 1% by weight, preferably is 0.05 to 1% by weight, more preferably is 0.1 to 0.7% by weight, and particularly preferably is 0.1 to 0.5% by weight. When the saturated moisture absorption is within this range, various optical characteristics such as transparency, retardation, uniformity of retardation, and dimensional stability, can be maintained even under hot and humid conditions, and adhesion and bonding properties with other materials are excellent. Thus, the film will not separate during its use. Also, because the resin has good compatibility with additives such as antioxidants and the like, a wide range of additives may be used. The above-mentioned saturated moisture absorption is determined by measuring the weight increase after one week of immersion in 23°C water according to ASTM D570.

The SP value (solubility parameter) of the cyclic olefin type resin is preferably 10 to 30 (MPa^{1/2}), more preferably is 12 to 25 (MPa^{1/2}), and particularly preferably is 15 to 20 (MPa^{1/2}). When the SP value is within the above-mentioned range, the norbornene type resin can be dissolved readily in common solvents and the film can be manufactured stably, and further characteristics of the obtainable film are uniform, adhesion and bonding properties with the substrate are good, and the moisture absorbance is controlled appropriately.

Although the glass transition temperature (Tg) of the above-mentioned cyclic olefin type resin will vary depending on the types of the constituent units (I) and the constituent units (II) of the norbornene type resin, composition ratios, presence or absence of additives, and the like; this is normally 80 to 350°C, preferably is 100 to 250°C, and more preferably is 120 to 200°C. When the Tg is below the above-mentioned range, the thermal deformation temperature is lowered, and there is concern with the occurrence of a heat resistance problem, and the obtainable optical film may drastically change its optical characteristics with temperature. On the other hand, when the Tg is higher than the above-mentioned range, the possibility of thermal degradation of the resin is high when the resin is stretched or processed at near the Tg.

As long as the transparency and heat resistance are not deteriorated, the above-mentioned norbornene type resin may be blended with known thermoplastic resins, thermoplastic elastomers, rubbery polymers, fine organic particles, fine inorganic particles, antioxidants, ultraviolet radiation absorbents, release agents, fire retardants, antimicrobial agents, wood powders, coupling agents, petroleum resins, plasticizers, colorants, lubricants, antistatic agents, silicone oils, foaming agents, and the like.

### <Optical Anisotropic Layer b>

The optical anisotropic layer b constituting the optical film of the present invention exhibits homeotropic orientation. The optical anisotropic layer b can be formed by curing a liquid crystal compound which has homeotropic orientation. This optical anisotropic layer b preferably satisfies the below listed formulae (6) and (7).
(6) -1000 nm ≦ R_{b}th ≦ 0 nm
(7) 0 nm ≦ R_{b} ≦ 50 nm
In formulae (6) and (7), R_{b}th indicates the retardation in the thickness direction of the optical anisotropic layer b at a wavelength of 550 nm and is expressed by R_{b}th = [(nx_{b} + ny_{b})/2 - nz_{b}] × d_{b}; R_{b} indicates the in-plane retardation of the optical anisotropic layer b at a wavelength of 550 nm and is expressed by R_{b} = (nx_{b} - ny_{b}) × d_{b}; nx_{b} is the maximum in-plane refractive index of the optical anisotropic layer b; ny_{b} is the in-plane refractive index of the optical anisotropic layer b in a direction perpendicular to nx_{b}; nz_{b} is the refractive index of the optical anisotropic layer b in the thickness direction perpendicular to nx_{b} and ny_{b}; and d_{b} is the thickness (nm) of the optical anisotropic layer b.

For the above-mentioned optical anisotropic layer b, as indicated in the above-mentioned formula (6), R_{b}th is in the range of -1000 nm to 0 nm, preferably is -700 to -30 nm, and more preferably is -500 nm to -50 nm. Moreover, as indicated in the above-mentioned formula (7), R_{b} is within the range of 0 nm to 50 nm, preferably is 0 nm to 30 nm, and more preferably is 0 nm to 20 nm. The fact that R_{b}th and R_{b} are within the above-mentioned ranges means that at least nz_{b} ≧ ny_{b}, and nz_{b} ≧ nx_{b} in many cases. When the above conditions are satisfied, with respect to the total optical characteristics, i.e., optical characteristics of the optical anisotropic layer and the cyclic olefin type resin film a in combination, the refractive index in the thickness direction is large and the above-mentioned formula (3) is satisfied, and a good viewing angle compensation effect can be obtained particularly in an IPS mode liquid crystal display device.

In order to obtain uniformity of orientation, the thickness of the above-mentioned optical anisotropic layer b is 50 nm to 5000 nm, preferably is 80 nm to 4000 nm, and particularly preferably is 100 nm to 3000 nm.

Such optical anisotropic layer b can be formed as a liquid crystal cured layer by applying a liquid crystal composition including a photopolymerization initiator and a polymerizable liquid crystal compound which has homeotropic orientation and polymerizable functional groups (e.g., (meth)acrylic group and the like) on the above-mentioned film a or on a thin film layer c provided on the above-mentioned film a; then by performing heat treatment to evaporate the solvent, to generate the liquid crystal state and to cause homeotropic orientation; and by curing the composition by photopolymerization. The thin film layer c preferably functions as a vertically oriented film in order to facilitate the homeotropic orientation. The liquid crystal composition may further contain an orientation auxiliary agent. Coating is not the only way to form the optical anisotropic layer b on the above-mentioned film a, or on the above-mentioned thin film layer c provided on the film a. The optical film of the present invention is also produced by forming the optical anisotropic layer b in the same manner as described above on a substrate (e.g. PET film, glass, or the like), and by transferring the optical anisotropic layer b onto the film a or the thin film layer c provided on the film a, by the use of an adhesive film layer d.

The above-mentioned liquid crystal compounds having homeotropic orientation include nematic liquid crystals and smectic liquid crystals. Among these liquid crystals, the nematic liquid crystals are preferred and, for example, Schiff-base type liquid crystals, azoxy type liquid crystals, biphenyl type liquid crystals, phenylcyclohexane type liquid crystals, ester type liquid crystals, terphenyl type liquid crystals, biphenylcyclohexane liquid crystals, pyrimidine type liquid crystals, dioxane type liquid crystals, bicyclooctane type liquid crystals, cubane type liquid crystals, and the like can be preferably used. Among these examples, the ester type liquid crystals having a biphenylene group and/or a phenylene group are more preferable. In addition, the liquid crystal compound used in the present invention should have a polymerizable functional group in order to form the optical anisotropic layer b with an orientation fixed by photo-curing after the homeotropic orientation. The liquid crystal compound used in the present invention preferably has a monofunctional or bifunctional acrylic group as the polymerizable functional group at the molecular end. The liquid crystal compounds in the present invention can be used singly or two or more kinds may be used in combination.

The above-mentioned photopolymerization initiators include IRGACURE® 907 and IRGACURE® 184 (manufactured by Ciba Specialty Chemicals Corp.). The amount of the polymerization initiator based on 100 weight parts of the above-mentioned liquid crystal compound is normally 0.1 to 20 weight parts and preferably is 0.5 to 10 weight parts. When the amount of the photopolymerization initiator is less than the above-mentioned range, the curing of the liquid crystal compound does not proceed sufficiently and there are instances that the optical anisotropic layer b does not have sufficient hardness. When the amount of the photopolymerization initiator exceeds the above-mentioned range, there are instances that the storage stability of the optical anisotropic layer b is lowered, and the liquid crystal compound is not uniformly orientated.

No particular limitation is placed on the solvent used for the liquid crystal composition containing the above-mentioned liquid crystal compound and the photopolymerization initiator as long as the above-mentioned liquid crystal compound and the photopolymerization initiator can be dissolved or dispersed and can be stably stored. For example, the solvents include: methanol, ethanol, isopropyl alcohol, 1-butanol, acetone, methyl ethyl ketone, methyl isobutyl ketone, cyclohexanone, dichloromethane, chloroform, toluene, xylene, chlorobenzene, cyclopentane, cyclohexane, diethyl ether, tetrahydrofuran, ethylene glycol, dioxane, dimethoxyethane, propylene glycol, propylene glycol monomethyl ether, propylene glycol dimethyl ether, propylene glycol monomethyl ether acetate, ethyl acetate, butyl acetate, t-butyl acetate, ethyl lactate, t-butyl lactate, 1-methyl-2-pyrrolidone, γ-butyrolactone, N,N-dimethylformamide, N,N-dimethylacetamide, water, and the like. Such solvents can be used singly or two or more kinds may be used in combination.
Commercially available products of the above-mentioned liquid crystal compositions include RMS03-015 (manufactured by Merck KGaA).

### <Production Method for Optical Film Comprising Film a and Optical Anisotropic Layer b>

The optical film of the present invention can be produced by applying the liquid crystal composition comprising the above-mentioned liquid crystal compound, the above-mentioned photopolymerization initiator, and the like on the non-oriented film a formed of the above-mentioned cyclic olefin type resin, or on the film a uniaxially or biaxially oriented to have specific optical characteristics; then heating the composition to dry the same and to cause homeotropic orientation; and then photopolymerizing the composition to form a liquid crystal cured layer as the optical anisotropic layer b.

The optical film of the present invention can also be produced by applying the above-mentioned liquid crystal composition on the non-oriented film a formed of the above-mentioned cyclic olefin type resin; then heating the composition to dry the same and to cause homeotropic orientation; photopolymerizing the composition to form a liquid crystal cured layer as the optical anisotropic layer b; and uniaxially or biaxially orienting the thus-obtained laminate film.

Surface treatment of the above-mentioned film a may be performed in order to obtain good adhesion with the optical anisotropic layer b or to facilitate the generation of homeotropic orientation of the liquid crystal compound.

No particular limitation is placed on the application method for the above-mentioned liquid crystal composition, and various methods can be used, such as spin coating, wire coating, bar coating, roll coating, blade coating, curtain coating, screen printing, and the like.

No particular limitation is placed on the drying temperature for the liquid crystal composition, and the drying temperature may be, for example, 60°C to 150°C.

Furthermore, the dosage of light during the photo-curing of the liquid crystal composition is preferably 300 to 2000 mJ/cm², more preferably is 400 to 1500 mJ/cm², and particularly preferably is 500 to 1200 mJ/cm².

### <Thin Film Layer c>

The optical film of the present invention may have at least one thin film layer c between the above-mentioned film a and the optical anisotropic layer b. This thin film layer c preferably has at least one function from among the following: a function of protecting the above-mentioned film a from the solvent of the liquid crystal composition, a function of facilitating the generation of homeotropic orientation of the liquid crystal compound, and a function of achieving adhesion between the above-mentioned film a and the optical anisotropic layer b. Although no particular limitation is placed on the material of the thin film layer c, acrylic type polymers, polyurethanes, polysiloxanes, polyimides, and the like can be used.

Although no particular limitation is placed on the thickness of the above-mentioned thin film layer c, the thickness is preferably in the range of 0.01 to 10 µm and more preferably 0.1 to 7 µm. When the thickness is less than the above-mentioned range, there are instances that the effect of the optical anisotropic layer b is inadequate. Also, when the thickness is greater than the above-mentioned range, there are instances that the film formability is lowered.

(i) Acrylic Type Polymer Thin Film Layer
   No particular limitation is placed on the acrylic type polymer that forms the acrylic type polymer thin film layer as long as the polymer has, as a monomer unit, a (meth)acrylate compound having at least one (meth) acryloyl group in the molecule. Examples of the (meth) acrylate compounds include monofunctional (meth)acrylate compounds and polyfunctional (meth)acrylate compounds. Among such compounds, polyfunctional (meth)acrylate compounds are preferred because the adhesion between the above-mentioned film a and the optical anisotropic layer b can be improved.

The above-mentioned monofunctional (meth)acrylate compounds include: alkyl (meth)acrylates such as methyl (meth)acrylate, ethyl (meth)acrylate, propyl (meth)acrylate, isopropyl (meth)acrylate, butyl (meth)acrylate, isobutyl (meth)acrylate, tert-butyl (meth)acrylate, pentyl (meth)acrylate, amyl (meth)acrylate, isoamyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, decyl (meth)acrylate, isodecyl (meth)acrylate, undecyl (meth)acrylate, dodecyl (meth)acrylate, lauryl (meth)acrylate, stearyl (meth)acrylate, isostearyl (meth)acrylate, and the like; hydroxyalkyl (meth)acrylates such as hydroxyethyl (meth)acrylate, hydroxypropyl (meth)acrylate, hydroxybutyl (meth)acrylate, and the like; phenoxyalkyl (meth)acrylates such as phenoxyethyl (meth)acrylate, 2-hydroxy-3-phenoxypropyl (meth)acrylate, and the like; alkoxyalkyl (meth)acrylates such as methoxyethyl (meth)acrylate, ethoxyethyl (meth)acrylate, propoxyethyl (meth)acrylate, butoxyethyl (meth)acrylate, methoxybutyl (meth)acrylate, and the like; polyethylene glycol (meth) acrylates such as polyethylene glycol mono (meth) acrylate, ethoxy diethylene glycol (meth)acrylate, methoxy polyethylene glycol (meth)acrylate, phenoxypolyethylene glycol (meth)acrylate, nonyl phenoxypolyethylene glycol (meth)acrylate, and the like; polypropylene glycol (meth) acrylates such as polypropylene glycol mono (meth) acrylate, methoxy polypropylene glycol (meth)acrylate, ethoxy polypropylene glycol (meth)acrylate, nonyl phenoxy polypropylene glycol (meth)acrylate, and the like; cycloalkyl (meth)acrylates such as cyclohexyl (meth)acrylate, 4-butylcyclohexyl (meth)acrylate, dicyclopentanyl (meth)acrylate, dicyclopentenyl (meth)acrylate, dicyclopentadienyl (meth)acrylate, bornyl (meth)acrylate, isobornyl (meth)acrylate, tricyclodecanyl (meth)acrylate, and the like; benzyl (meth)acrylate, tetrahydrofurfuryl (meth)acrylate, and the like. These monofunctional (meth) acrylate compounds can be used singly or two or more kinds may be used in combination.

The above-mentioned polyfunctional (meth)acrylate compounds include: alkylene glycol di(meth)acrylates such as ethylene glycol di(meth)acrylate, diethylene glycol di(meth)acrylate, tetraethylene glycol di(meth)acrylate, polyethylene glycol di(meth)acrylate, 1,4-butanediol di(meth)acrylate, 1,6-hexanediol di(meth)acrylate, neopentyl glycol di(meth)acrylate, and the like; polyvalent alcohol poly(meth)acrylates such as trimethylolpropane tri(meth)acrylate, trimethylolpropane trihydroxyethyl tri(meth)acrylate, ditrimethylolpropane tetra(meth)acrylate, pentaerythritol tri(meth)acrylate, pentaerythritol tetra(meth)acrylate, dipentaerythritol hexa(meth)acrylate, hydroxypivalic acid neopentyl glycol di(meth)acrylate, and the like; isocyanurate poly(meth)acrylates such as isocyanurate tri(meth)acrylate, tris(2-hydroxyethyl)isocyanurate di(meth)acrylate, tris(2-hydroxyethyl)isocyanurate tri(meth)acrylate, and the like; cycloalkane poly(meth)acrylates such as tricyclodecane diyl dimethyl di(meth)acrylate, and the like; bisphenol A (meth)acrylate derivatives such as bisphenol A ethylene oxide adduct di(meth)acrylate, bisphenol A propylene oxide adduct di (meth) acrylate, bisphenol A alkylene oxide adduct di(meth)acrylates, hydrogenated bisphenol A ethylene oxide adduct di(meth)acrylate, hydrogenated bisphenol A propylene oxide adduct di (meth) acrylate, hydrogenated bisphenol A alkylene oxide adduct di(meth)acrylate, (meth)acrylates obtained from bisphenol A diglycidyl ether and (meth)acrylic acid, and the like; and
fluorine-containing (meth)acrylates such as 3,3,4,4,5,5,6,6-octafluorooctane di(meth)acrylate, 3-(2-perfluorohexyl)ethoxy-1,2-di(meth)acryloyl propane, N-n-propyl-N-2,3-di(meth)acryloyl propylperfluorooctyl sulfonamide, and the like. These polyfunctional (meth)acrylate compounds can be used singly or two or more kinds may be used in combination.

Among these polyfunctional (meth)acrylate compounds, dipentaerythritol hexaacrylate, pentaerythritol tetraacrylate, pentaerythritol triacrylate, trimethylolpropane triacrylate, and the like are particularly preferred since a large number of acryloyl groups are contained in the molecule so that the cross-link density is high and the polyfunctional (meth) acrylate compound provides excellent adhesion.

The acrylic type polymer thin film layer can be formed by a method in which a solution of the acrylic type polymer is applied on the film a and then dried, or a method in which a composition containing the (meth)acrylate compound and a polymerization initiator is applied on the film a and then polymerized.

When the above-mentioned (meth) acrylate compound is applied on the surface of the film a and is polymerized, a thermal polymerization initiator or a photopolymerization initiator can be used as the polymerization initiator. However, the use of photopolymerization initiator is preferred from the standpoints of storage stability and productivity.

Specific examples of the above-mentioned photopolymerization initiator include: 1-hydroxycyclohexyl phenyl ketone, 2,2'-dimethoxy-2-phenylacetophenone, xanthone, fluorene, fluorenone, benzaldehyde, anthraquinone, triphenylamine, carbazole, 3-methylacetophenone, 4-chlorobenzophenone, 4,4'-dimethoxybenzophenone, 4,4'-diaminobenzophenone, Michler's ketone, benzoyl propyl ether, benzoin ethyl ether, benzyl dimethyl ketal, 1-(4-isopropylphenyl)-2-hydroxy-2-methylpropan-1-one, 2-hydroxy-2-methyl-1-phenylpropan-1-one, thioxanthone, diethyl thioxanthone, 2-isopropyl thioxanthone, 2-chloro thioxanthone, 2-methyl-1-[4-(methylthio)phenyl]-2-morpholinopropan-1-one, 2,4,6-trimethylbenzoyl diphenyl phosphine oxide, 2-benzyl-2-dimethylamino-1-(4-morpholinophenyl)butan-1-one, 1-[4-(2-hydroxyethoxy)-phenyl]-2-hydroxy-2-methylpropan-1-on e, and the like. These photopolymerization initiators can be used singly or two or more kinds may be used in combination.

Among these photopolymerization initiators, 2-methyl-1-[4-(methylthio)phenyl]-2-morpholinopropan-1-one, 2,4,6-trimethylbenzoyl diphenyl phosphine oxide, and 1-hydroxycyclohexyl phenyl ketone are preferred.

These photopolymerization initiators are commercial available, for example 2-methyl-1-[4-(methylthio)phenyl]-2-morpholinopropan-1-one as IRGACURE® 907 manufactured by Ciba Specialty Chemicals Corp., and 1-hydroxycyclohexyl phenyl ketone as IRGACURE® 184 manufactured by Ciba Specialty Chemicals Corp.

Although no particular limitation is placed on the amount of the above-mentioned photopolymerization initiator as long as the amount is sufficient for the curing reaction to proceed, the amount per 100 weight parts of the (meth)acrylate compound is normally 0.1 to 20 weight parts and preferably is 0.5 to 10 weight parts. When the amount of the photopolymerization initiator is less than the above-mentioned range, there are instances that the progress of the curing reaction of the (meth)acrylate compound may be insufficient, and the thin film layer c does not have sufficient hardness. When the amount of the photopolymerization initiator exceeds the above-mentioned range, there are instances that the storage stability of the thin film layer c may be lowered.

Addition of a solvent to the composition which contains the above-mentioned (meth)acrylate compound is preferred from the standpoint of film formability. No particular limitation is placed on the solvent as long as the above-mentioned (meth)acrylate compound is dissolved or dispersed. The above-mentioned composition may be an organic solvent system or may be an aqueous system such as emulsion, colloid dispersion liquid, aqueous solution, or the like.

The utilized organic solvents include: methanol, ethanol, isopropyl alcohol, n-butyl alcohol, acetone, toluene, methyl ethyl ketone, methyl isobutyl ketone, ethyl acetate, and the like. In particular, from the standpoint of excellent film manufacturability and adhesion to the substrate, alcohols such as methanol, ethanol, isopropyl alcohol, and the like; and ketones such as methyl ethyl ketone, methyl isobutyl ketone, and the like are preferably used singly or in combination of two or more kinds. Water may also be included in the above-mentioned organic solvent.

(ii) Polyurethane Thin Film Layer
The polyurethane thin film layer can be formed by spreading a polyurethane composition on the surface of the above-mentioned film a. The polyurethane composition includes a polyurethane and a solvent.

No particular limitation is placed on the above-mentioned polyurethane as long as it is a polymer which has a plurality of urethane bonds, and examples which can be cited include polyurethanes obtained by reacting a polyol compound with polyisocyanate.

A hydrophilic group-containing compound is preferably added as a polymerization component together with the polyol compound and the polyisocyanate in order to dissolve or disperse stably the above-mentioned polyurethane in an organic solvent and/or water, and also to improve coating properties of the adhesive, and improve the adhesion of the adhesive to the substrate.

Examples of the above-mentioned polyol compound include: polyether polyols, polyester polyols, polyacrylate polyols, and the like. Among such polyol compounds, polyether polyols are particularly preferred. Examples of the polyether polyols include polyether polyols obtained by ring-opening copolymerization of a polyhydric alcohol and an ion polymerizable cyclic compound.

The above-mentioned polyhydric alcohols include ethylene glycol, polyethylene glycol, propylene glycol, polypropylene glycol, polytetramethylene glycol, polyhexamethylene glycol, polyheptamethylene glycol, polydecamethylene glycol, glycerin, trimethylolpropane, pentaerythritol, bisphenol A, bisphenol F, hydrogenated bisphenol A, hydrogenated bisphenol F, hydroquinone, naphthohydroquinone, anthrahydroquinone, 1,4-cyclohexane diol, tricyclodecane diol, tricyclodecane dimethanol, pentacyclopentadecane diol, pentacyclopentadecane dimethanol, and the like. These polyhydric alcohols can be used singly or two or more kinds may be used in combination.

The above-mentioned ion polymerizable cyclic compounds include cyclic ethers such as ethylene oxide, propylene oxide, 1,2-butylene oxide, butene-1-oxide, isobutene oxide, 3,3-bischloromethyloxetane, tetrahydrofuran, 2-methyltetrahydrofuran, 3-methyltetrahydrofuran, dioxane, trioxane, tetraoxane, cyclohexene oxide, styrene oxide, epichlorohydrin, glycidyl methacrylate, allylglycidyl ether, allyl glycidyl carbonate, butadiene monoxide, isoprene monoxide, vinyl oxetane, vinyl tetrahydrofuran, vinyl cyclohexene oxide, phenyl glycidyl ether, butyl glycidyl ether, benzoic acid glycidyl esters, and the like. These compounds can be used singly or two or more kinds may be used in combination.

Also, use is possible of polyether polyols obtained by ring-opening copolymerization of the above-mentioned ion polymerizable cyclic compounds with: cyclic imines such as ethyleneimine and the like; cyclic lactone acids such as β-propiolactone, glycolic acid lactide, and the like; dimethylcyclopolysiloxanes; and the like. These ring-opening copolymers of the ion polymerizable cyclic compounds may be random copolymers or block copolymers. Preferred examples of such polyether polyols include polytetramethylene glycol and polyhexamethylene glycol.

General polyisocyanates used in the production of polyurethanes may be used without particular limitation. For example, such polyisocyanates include: 2,4-tolylene diisocyanate, 2,6-tolylene diisocyanate, 1,3-xylylene diisocyanate, 1,4-xylylene diisocyanate, 1,5-naphthalene diisocyanate, m-phenylene diisocyanate, p-phenylene diisocyanate, 3,3'-dimethyl-4,4'-diphenylmethane diisocyanate, 4,4'-diphenylmethane diisocyanate, 3,3'-dimethylphenylene diisocyanate, 4,4'-biphenylene diisocyanate, 1,6-hexane diisocyanate, isophorone diisocyanate, methylene bis(4-cyclohexylisocyanate), 2,2,4-trimethylhexamethylene diisocyanate, bis(2-isocyanate ethyl) fumarate, 6-isopropyl-1,3-phenyl diisocyanate, 4-diphenylpropane diisocyanate, lysine diisocyanate, hydrogenated diphenylmethane diisocyanate, hydrogenated xylylene diisocyanate, tetramethyl xylylene diisocyanate, 2,5 (or 6) -bis (isocyanate methyl)-bicyclo [2.2.1] heptane, and the like. These polyisocyanates may be used singly or two or more kinds may be used in combination. Among these polyisocyanates, isophorone diisocyanate is preferred.

The hydrophilic group-containing compounds include ionic compounds which have at least one active hydrogen atom per molecule and which include a carboxylic acid group and/or a sulfonic acid group.

Such hydrophilic group-containing compounds include, for example, sulfonic acid compounds and derivatives thereof such as 2-oxyethanesulfonic acid, phenolsulfonic acid, sulfobenzoic acid, sulfosuccinic acid, 5-sulfoisophthalic acid, sulfanilic acid, 1,3-phenylenediamine-4,6-disulfonic acid, and 2,4-diaminotoluene-5-sulfonic acid; and carboxylic acid compounds and derivatives thereof such as 2,2-dimethylolpropionic acid, 2,2-dimethylolbutyric acid, 2,2-dimethylolvaleric acid, dioxymaleic acid, 2,6-dioxybenzoic acid, and 3,4-diaminobenzoic acid.

When the polyol compound, the polyisocyanate and optionally the hydrophilic group-containing compound are reacted with each other, a urethanation catalyst is preferably used (normally copper naphthenate, cobalt naphthenate, zinc naphthenate, di-n-butyl tin laurate, triethylamine, 1,4-diazabicyclo[2.2.2]octane, 2,6,7-trimethyl-1,4-diazabicyclo[2.2.2]octane, or the like), in an amount of 0.01 to 1 weight part based on 100 weight parts of the total of the reaction mixture. The reaction temperature is normally 10°C to 90°C and preferably is 30°C to 80°C.

The number average molecular weight of the polyurethane resin used in the present invention is normally 1, 000 to 200, 000 and preferably is about 30,000 to 100,000.

No particular limitation is placed on the solvent used in the polyurethane composition as long as the solvent is capable of dissolving or dispersing the polyurethane resin. The polyurethane composition may be an organic solvent system or may be an aqueous system such as emulsion, colloid dispersion liquid, aqueous solution, or the like.

The utilized organic solvents include methanol, ethanol, isopropyl alcohol, n-butyl alcohol, acetone, toluene, methyl ethyl ketone, methyl isobutyl ketone, ethyl acetate, and the like. Also in the case of aqueous system, the above alcohols or ketones may be added. Furthermore, in the case of the aqueous system, a dispersing agent may be used, and a functional group (carboxyl group, sulfonyl group, ammonium group, or the like) may be introduced into the polyurethane resin.

In the combination of the above-mentioned solvents, from the standpoint that changes of retardation of the film a are small and good coatability can be obtained, a single or two or more solvents are preferably used which are selected from methanol, ethanol, isopropyl alcohol, n-butyl alcohol, methyl ethyl ketone, methyl isobutyl ketone, and water.

The solid content concentration of the above-mentioned polyurethane composition is normally 1 to 60% by weight, preferably 1 to 30% by weight, and more preferably 1 to 10% by weight. When the solid content concentration is lower than the above-mentioned range, it is difficult to form the polyurethane layer in a desired thickness. On the other hand, when the above-mentioned range is exceeded, it is difficult to form the polyurethane layer with uniformity.

The below described various additives (v) may be blended in the above-mentioned polyurethane composition. In particular, when a carboxyl group has been introduced as the hydrophilic group-containing compound in the polyurethane composition, an epoxy type cross-linking agent is preferably used.

No particular limitation is placed on such epoxy cross-linking agents as long as the epoxy cross-linking agents have at least one epoxy group in the molecule. Examples include: bisphenol type epoxy compounds, novolac type epoxy compounds, alicyclic epoxy compounds, aliphatic epoxy compounds, aromatic epoxy compounds, glycidyl-amine type epoxy compounds, halogenated epoxy compounds, and the like.

More specifically, the epoxy cross-linking agents include:
bisphenol type epoxy compounds such as bisphenol A diglycidyl ether, bisphenol F diglycidyl ether, bisphenol S diglycidyl ether, and the like;
novolac type epoxy compounds such as phenol novolac type epoxy compounds, cresol novolac type epoxy compounds, and the like; alicyclic epoxy compounds such as 3,4-epoxy cyclohexylmethyl-3',4'-epoxy cyclohexane carboxylate, 2-(3,4-epoxy cyclohexyl-5,5-spiro-3,4-epoxy) cyclohexane-meta-dioxane, bis(3,4-epoxy cyclohexylmethyl)adipate, vinylcyclohexene oxide, 4-vinyl epoxy cyclohexane, bis(3,4-epoxy-6-methylcyclohexylmethyl)adipate, 3,4-epoxy -6-methylcyclohexyl-3',4'-epoxy-6'-methylcyclohexane
carboxylate, methylene bis(3,4-epoxy cyclohexane), dicyclopentadiene diepoxide, di(3,4-epoxy cyclohexylmethyl) ether of ethylene glycol, ethylene bis(3,4-epoxy cyclohexane carboxylate), epoxidized tetrabenzyl alcohol, lactone-modified 3,4-epoxy cyclohexylmethyl-3',4' -epoxy cyclohexane carboxylate, lactone-modified epoxidized tetrahydrobenzyl alcohol, cyclohexene oxide, hydrogenated bisphenol A diglycidyl ether, hydrogenated bisphenol F diglycidyl ether, hydrogenated bisphenol AD diglycidyl ether, and the like; aliphatic epoxy compounds such as 1,4-butanediol diglycidyl ether, 1,6-hexanediol diglycidyl ether, glycerin triglycidyl ether, trimethylolpropane triglycidyl ether, and the like; halogenated epoxy compounds such as brominated bisphenol A diglycidyl ether, brominated bisphenol F diglycidyl ether, brominated bisphenol S diglycidyl ether, and the like; and glycidyl-amine type epoxy compounds such as tetraglycidyl aminophenyl methane and the like.

In addition, examples other than the above mentioned compounds include: polyalkylene glycoldiglycidyl ethers such as polyethylene glycol diglycidyl ether, polypropylene glycol diglycidyl ether, and the like; polyglycidyl ethers of polyether polyols obtained by addition of 1 or 2 or more kinds of alkylene oxides to an aliphatic polyvalent alcohol such as ethylene glycol, propylene glycol, glycerin, or the like; diglycidyl esters of aliphatic long-chain dibasic acids; monoglycidyl ethers of aliphatic higher alcohols; monoglycidyl ethers of phenol, cresol, and butyl phenol, and monoglycidyl ethers of polyether alcohols obtained by addition of alkylene oxides to these alcohols; glycidyl esters of higher fatty acids; epoxidized soybean oil, butyl epoxy stearate, octyl epoxy stearate, epoxidized flaxseed oil, and the like.

In an embodiment of the present invention, one or two or more kinds of these compounds may be polymerized beforehand to an appropriate extent and the obtained epoxy resin may be used in the invention.

Furthermore, the epoxy compounds that can be used in the present invention include compounds obtained by epoxidizing polymers of conjugated diene type monomers, copolymers of a conjugated diene type monomer and a compound having an ethylenically unsaturated bond group, copolymers of a diene type monomer and a compound having an ethylenically unsaturated bond group, and (co)polymers such as natural rubbers.

Commercially available products of the above-mentioned polyurethane compositions include: HYDRAN® WLS-201, WLS-202, WLS-210, WLS-213, and WLS-220 (produced by Dainippon Ink and Chemicals, Inc.).

(iii) Polysiloxane Type Thin Film Layer
The polysiloxane type thin film layer can be formed by applying an alkylsilane composition on the surface of the above-mentioned film a. The alkylsilane composition includes an alkylsilane compound and a solvent. The alkylsilane compounds include: octyl trimethoxy silane, octyl triethoxy silane, dodecyl triethoxysilane, tetradecyl trichlorosilane, octadecyl triethoxysilane, octadecyl trichlorosilane, diethoxymethyl octadecyl silane, and the like. The alkylsilane compounds may contain fluorine. The alkylsilane compounds may be used singly or two or more kinds may be used in combination.

The alkylsilane compound is hydrolyzed into silanol (Si-OH). The silanol undergoes polycondensation to form siloxane bonds (Si-O-Si), whereby the compound is cured. The alkylsilane composition is applied on the above mentioned film a and then dried by heating, which induces polycondensation resulting in a cured film.

(iv) Polyimide Type Thin Film Layer
The polyimide type thin film layer can be formed by applying a polyamic acid composition or a soluble polyimide composition on the surface of the above mentioned film a, and then heating the coating film. The polyamic acid composition or soluble polyimide composition contains a solvent, and a polyamic acid and/or a polyimide. The polyimide resin preferably functions as a vertically oriented film.

The above mentioned polyamic acid is obtained by reacting a tetracarboxylic acid dianhydride with a diamine. The soluble polyimide is obtained by subjecting the polyamic acid to a dehydration ring-closing reaction.

The tetracarboxylic acid dianhydrides used for the synthesis of the above mentioned polyamic acid include: aliphatic and alicyclic tetracarboxylic acid dianhydrides such as butane tetracarboxylic acid dianhydride, 1,2,3,4-cyclobutane tetracarboxylic acid dianhydride, 1,2-dimethyl-1,2,3,4-cyclobutane tetracarboxylic acid dianhydride, 1,3-dimethyl-1,2,3,4-cyclobutane tetracarboxylic acid dianhydride, 1,3-dichloro-1,2,3,4-cyclobutane tetracarboxylic acid dianhydride, 1,2,3,4-tetramethyl-1,2,3,4-cyclobutane tetracarboxylic acid dianhydride, 1,2,3,4-cyclopentane tetracarboxylic acid dianhydride, 1,2,4,5-cyclohexane tetracarboxylic acid dianhydride, 3,3',4,4'-dicyclohexyl tetracarboxylic acid dianhydride, 2,3,5-tricarboxycyclopentyl acetic acid dianhydride, 3,5,6-tricarboxynorbornane-2-acetic acid dianhydride, 2,3,4,5-tetrahydrofuran tetracarboxylic acid dianhydride, 1,3,3a,4,5,9b-hexahydro-5 (tetrahydro-2,5-dioxo-3-furanyl)-naphtho [1,2-c]-furan-1,3-dione, 1,3,3a,4,5,9b-hexahydro-8-methyl-5 (tetrahydro-2,5-dioxo-3-furanyl) -naphtho[1,2-c]-furan-1,3-dione, 5-(2,5-dioxotetrahydrofural) -3-methyl-3-cyclohexene-1,2-dicarboxylic acid dianhydride, bicyclo [2,2,2]-oct-7-ene-2,3,5,6-tetracarboxylic acid dianhydride, and the like; and aromatic tetracarboxylic acid dianhydrides such as pyromellitic acid dianhydride, 3,3',4,4'-benzophenonetetracarboxylic acid dianhydride, 3,3',4,4'-biphenylsulfone tetracarboxylic acid dianhydride, 1,4,5,8-naphthalenetetracarboxylic acid dianhydride, 2,3,6,7-naphthalenetetracarboxylic acid dianhydride, 3,3',4,4'-biphenyl ether tetracarboxylic acid dianhydride, 3,3',4,4'-dimethyldiphenylsilane tetracarboxylic acid dianhydride, 3,3',4,4'-tetraphenylsilanetetracarboxylic acid dianhydride, 1,2,3,4-furantetracarboxylic acid dianhydride, 4,4'-bis(3,4-dicarboxyphenoxy)diphenyl sulfide dianhydride, 4,4'-bis(3,4-dicarboxyphenoxy)diphenyl sulfone dianhydride, 4,4'-bis(3,4-dicarboxyphenoxy)diphenylpropane dianhydride, 3,3',4,4'-perfluoroisopropylidene diphthalic acid dianhydride, 3,3',4,4'-biphenyltetracarboxylic acid dianhydride, bis(phthalic acid) phenylphosphine oxide dianhydride, p-phenylene-bis(triphenylphthalic acid) dianhydride, m-phenylene-bis(triphenylphthalic acid) dianhydride, bis(triphenylphthalic acid)-4,4'-diphenyl ether dianhydride, bis(triphenylphthalic acid)-4,4'-diphenylmethane dianhydride, ethylene glycol-bis(anhydrotrimellitate), propylene glycol-bis(anhydrotrimellitate), 1,4-butanediol-bis(anhydrotrimellitate), 1,6-hexanediol-bis(anhydrotrimellitate), 1,8-octanediol-bis(anhydrotrimellitate), 2,2-bis(4-hydroxyphenyl)propane-bis(anhydrotrimellitate), and the like. These compounds can be used singly or two or more kinds may be used in combination.

The diamines used for the synthesis of the above mentioned polyamic acid include: aromatic diamines such as p-phenylene diamine, m-phenylene diamine, 4,4'-diaminodiphenylmethane, 4,4'-diaminodiphenylethane, 4,4'-diaminodiphenylsulfide, 4,4'-diaminodiphenylsulfone, 3,3'-dimethyl-4,4'-diaminobiphenyl, 4,4'-diaminobenzanilide, 4,4'-diaminodiphenyl ether, 1,5-diaminonaphthalene, 3,3-dimethyl-4,4'-diaminobiphenyl, 5-amino-1-(4'-aminophenyl)-1,3,3-trimethylindane, 6-amino-1-(4'-aminophenyl)-1,3,3-trimethylindane, 3,4'-diaminodiphenyl ether, 3,3'-diaminobenzophenone, 3,4'-diaminobenzophenone, 4,4'-diaminobenzophenone, 2,2-bis[4-(4-aminophenoxy)phenyl] propane, 2,2-bis[4-(4-aminophenoxy)phenyl] hexafluoropropane, 2,2-bis(4-aminophenyl)hexafluoropropane, 2,2-bis[4-(4-aminophenoxy)phenyl] sulfone, 1,4-bis(4-aminophenoxy)benzene, 1,3-bis(4-aminophenoxy)benzene, 1,3-bis(3-aminophenoxy)benzene, 9,9-bis(4-aminophenyl)-10-hydroanthracene, 2,7-diaminofluorene, 9,9-bis(4-aminophenyl)fluorene, 4,4'-methylene-bis(2-chloroaniline), 2,2',5,5'-tetrachloro-4,4'-diaminobiphenyl, 2,2'-dichloro-4,4'-diamino-5,5'-dimethoxybiphenyl, 3,3'-dimethoxy-4,4'-diaminobiphenyl, 1,4,4'-(p-phenyleneisopropylidene)bisaniline, 4,4'-(m-phenyleneisopropylidene)bisaniline, 2,2'-bis[4-(4-amino-2-trifluoromethylphenoxy)phenyl] hexafluoropropane, 4,4'-diamino-2,2'-bis(trifluoromethyl)biphenyl, 4,4'-bis[(4-amino-2-trifluoromethyl)phenoxy]-octafluorobiphe nyl, and compounds represented by the following formulae (a) to (g) :

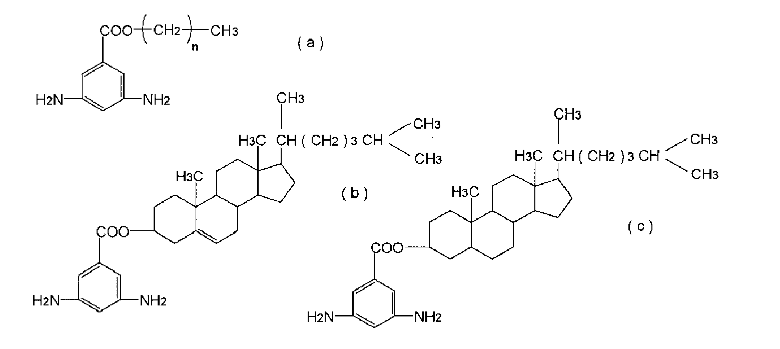

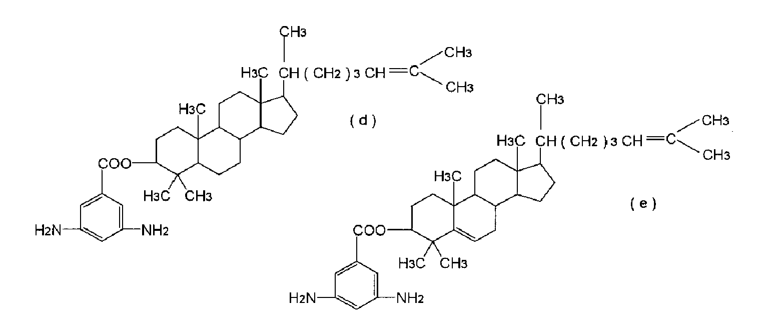

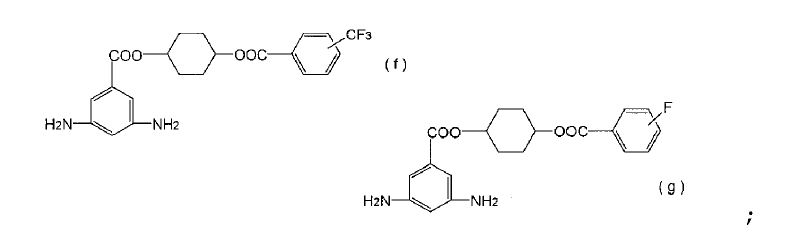

aliphatic and alicyclic diamines such as 1,1-metaxylylene diamine, 1,3-propane diamine, tetramethylene diamine, pentamethylene diamine, hexamethylene diamine, heptamethylene diamine, octamethylene diamine, nonamethylene diamine, 4,4-diaminoheptamethylene diamine, 1,4-diaminocyclohexane, isophorone diamine, tetrahydrodicyclopentadienylene diamine, hexahydro-4,7-methanoindanylenedimethylene diamine, tricyclo [6.2.1.02,7]-undecylenedimethyl diamine, and 4,4'-methylenebis(cyclohexylamine); and
diamines having two primary amino groups and a nitrogen atom other than the primary amino groups in the molecule, such as 2,3-diaminopyridine, 2,6-diaminopyridine, 3,4-diaminopyridine, 2,4-diaminopyrimidine, 5,6-diamino-2,3-dicyanopyrazine, 5,6-diamino-2,4-dihydroxypyrimidine, 2,4-diamino-6-dimethylamino-1,3,5-triazine, 1,4-bis(3-aminopropyl)piperazine, 2,4-diamino-6-isopropoxy-1,3,5-triazine, 2,4-diamino-6-methoxy-1,3,5-triazine, 2,4-diamino-6-phenyl-1,3,5-triazine, 2,4-diamino-6-methyl-s-triazine, 2,4-diamino-1,3,5-triazine, 4,6-diamino-2-vinyl-s-triazine, 2,4-diamino-5-phenylthiazole, 2,6-diaminopurine, 5,6-diamino-1,3-dimethyluracil, 3,5-diamino-1,2,4-triazole, 6,9-diamino-2-ethoxyacridine lactate, 3,8-diamino-6-phenylphenanthridine, 1,4-diaminopiperazine, 3,6-diaminoacridine, and bis(4-aminophenyl)phenylamine. These compounds can be used singly or two or more kinds may be used in combination.

The ratio of the tetracarboxylic acid dianhydride to the diamine compound used in the synthesis reaction for the polyamic acid is preferably such that when the equivalent weight of the amino groups in the diamine compound is 1, the equivalent weight of the acid anhydride groups in the tetracarboxylic acid dianhydride is 0.2 to 2, more preferably 0.3 to 1.2. The synthesis reaction for the polyamic acid is carried out in an organic solvent at a temperature of -20°C to 150°C and preferably 0°C to 100°C. No particular limitation is placed on the organic solvents as long as the organic solvents can dissolve the synthesized polyamic acid. Examples include: aprotic polar solvents such as N-methyl-2-pyrrolidone, N,N-dimethylacetamide, N,N-dimethylformamide, dimethyl sulfoxide, γ-butyrolactone, tetramethyl urea, and hexamethylphosphoric triamide; and phenolic solvents such as m-cresol, xylenol, phenol, and halogenated phenols. The amount (a) of the organic solvent is preferably such that the total amount (b) of the tetracarboxylic acid dianhydride and the diamine compound is 0.1 to 30% by weight based on the total amount (a + b) of the reaction solution. The organic solvents may be used in combination with an alcohol, ketone, ester, ether, halogenated hydrocarbon, hydrocarbon, and the like, which are poor solvents for the polyamic acid, without causing the precipitation of the generated polyamic acid.

The reaction solution in which the polyamic acid is dissolved can be obtained in the above described manner. This reaction solution is poured into a large amount of a poor solvent to cause a precipitate which is then dried under reduced pressure to give the polyamic acid. The polyamic acid can be purified by repeating this step (of dissolving the polyamic acid in the organic solvent and precipitating the polyamic acid with a poor solvent) another time or multiple times.

The soluble polyimide can be synthesized by dehydrating and ring-closing the above mentioned polyamic acid. The dehydration and ring-closing of the polyamic acid may be carried out by (I) heating the polyamic acid, or by (II) dissolving the polyamic acid in an organic solvent and adding a dehydrating agent and a dehydrating / ring-closing catalyst to the solution and optionally heating the thus obtained solution. The method (II) is preferred for obtaining the soluble polyimide.

The dehydrating agents used in the above mentioned method (II) include acid anhydrides such as acetic anhydride, propionic anhydride and trifluoroacetic anhydride. The amount of the dehydrating agent is preferably 0.01 to 20 mol per 1 mol of the repeating units of the polyamic acid. A tertiary amine such as pyridine, collidine, lutidine, or triethylamine may be used as the dehydrating / ring-closing catalyst, although the catalyst is not limited to these compounds. The amount of the dehydrating / ring-closing catalyst is preferably 0.01 to 10 mol per 1 mol of the dehydrating agent used.

The organic solvents used in the dehydration / ring-closing reaction include the organic solvents described in the synthesis of the polyamic acid. The temperature of the dehydration / ring-closing reaction is normally 0°C to 180°C and preferably 10°C to 150°C. The polyimide can be purified by subjecting the reaction solution to the same operation as is used for purifying the polyamic acid.

The solid content concentration of the above mentioned polyamic acid composition and the soluble polyimide composition is preferably 1 to 10% by weight. The organic solvents used in the composition include the organic solvents described in the synthesis of the polyamic acid. Use is appropriately possible of a poor solvent that may be selected from the poor solvents used in the synthesis reaction for the polyamic acid.

The compositions may contain various additives (v) as described below. In particular, the above mentioned epoxy type cross-linking agents can be used as cross-linking agent.

(v) Additives
The composition that forms the thin film layer c may contain cross-linking agents, thickening agents, antioxidants, colorants, ultraviolet radiation absorbents, light stabilizers, silane coupling agents, thermal polymerization inhibitors, leveling agents, surfactants, storage stabilizers, plasticizers, lubricants, fillers, anti-aging agents, wetting agents, surface improvers, and the like.

In order to control the crosslink density and film formability of the polymer, fine particles are preferably added. Specific preferred examples include inorganic fine particles such as silica, zirconia, titania, tin oxide, and the like; and organic fine particles of acrylic polymers.

### <Method of Forming Thin Film Layer c>

No particular limitation is placed on the method of forming the above mentioned thin film layer c, and various methods such as spin coating, wire coating, bar coating, roll coating, blade coating, curtain coating, screen printing, and the like can be used.

No particular limitation is placed on the drying temperature for the above mentioned compositions, but the drying temperature is, for example, 60°C to 150°C. In the case where the thin film layer c is cured by heating, such a temperature is desirable that promotes curing simultaneously with drying. It is preferred that the amount of residual solvent in the thin film layer c is as small as possible and is normally not more than 3% by weight, preferably is not more than 1% by weight, and more preferably is not more than 0.5% by weight.

The dosage of light when the above mentioned thin film layer c is photocured is preferably 300 to 2000 mJ/cm², more preferably 400 to 1500 mJ/cm², and particularly preferably 500 to 1200 mJ/cm².

The total light transmittance of the above mentioned thin film layer c is normally not less than 80% and preferably not less than 90%.

By laminating the film a and the optical anisotropic layer b with the thin film layer c between the film a and the optical anisotropic layer b, long-term stable adhesion of the optical anisotropic layer b can be obtained. Such thin film layer also helps the generation of homeotropic orientation of the liquid crystal compound that forms the optical anisotropic layer b.

### <Manufacturing Method for Optical Film Having Thin Film Layer c>

In the case where the optical film of the present invention has the above mentioned thin film layer c, the optical film can be produced by forming the thin film layer c through coating on the non-stretched film a, or on the film a that is uniaxially or biaxially stretched so as to have specific optical characteristics; then applying the above mentioned liquid crystal composition on the thin film layer c; heating the composition to dry the same and to cause homeotropic orientation; and photopolymerizing the composition to form a liquid crystal cured layer as the optical anisotropic layer b.

The optical film having the thin film layer c can also be produced by forming the above mentioned thin film layer c through coating on the non-stretched film a formed of the above mentioned cyclic olefin type resin; then applying the above mentioned liquid crystal composition on the thin film layer c; heating the composition to dry the same and to cause homeotropic orientation; photopolymerizing the composition to form a liquid crystal cured layer as the optical anisotropic layer b; and uniaxially or biaxially stretching the thus-obtained laminate.

By forming the thin film layer c between the film a and the optical anisotropic layer b as described above, the adhesion of the optical anisotropic layer b can be improved, and production stability and performance stability can be obtained when the optical film is processed or used. The thin film layer c also can help the generation of homeotropic orientation of the liquid crystal compound that forms the optical anisotropic layer b.

### <Adhesive Film Layer d>

The optical film of the present invention can be obtained by forming the optical anisotropic layer b on a substrate other than the film a, and transferring the optical anisotropic layer onto the film a, by the use of an adhesive film d. As a result, the optical film of the present invention may have the adhesive film layer d. This optical film may also have the thin film layer c, and the thin film layer c may be present between the film a and the adhesive film layer d, or between the adhesive film layer d and the optical anisotropic layer b.

The adhesive film layer d preferably functions to transfer and laminate the optical anisotropic layer b on the film a, and to bond the film a and the optical anisotropic layer b. Although no particular limitation is placed on the material of the adhesive film layer d, an acrylic type adhesive film is preferred.

Although no particular limitation is placed on the thickness of the above mentioned adhesive film layer d, the thickness is preferably within the range of 0.1 to 100 µm and more preferably 1 to 50 µm. In the case where the thickness is below the above-mentioned range, the adhesion of the adhesive film layer d may be insufficient. In the case where the thickness is greater than the above mentioned range, film formability may be lowered.

An adhesive film roll with one surface or both surfaces protected with a separator may be used as the adhesive film layer d.

### <Manufacturing Method for Optical Film Having Adhesive Film Layer d>

When the optical film of the present invention has the above mentioned adhesive film layer d, this optical film can be produced through the steps of: applying the above mentioned liquid crystal composition on a PET film or on glass; heating the composition to dry the same and to cause homeotropic orientation; then photopolymerizing the composition to form a liquid crystal cured layer as the optical anisotropic layer b; and transferring and bonding the optical anisotropic layer b, through the adhesive film layer d, on the non-stretched film a or on the film a that is uniaxially or biaxially stretched so as to have specific optical characteristics.

According to an embodiment, the film a and the adhesive film layer d may be attached together, and then the optical anisotropic layer b formed on another substrate may be attached to the adhesive film layer d. According to another embodiment, the optical anisotropic layer b formed on another substrate may be attached to the adhesive film layer d, and then the film a may be attached to the adhesive film layer d.

### <Non-Stretched Resin Film>

The non-stretched resin film formed of the cyclic olefin resin can be obtained by publicly known film forming methods such as melt forming, solution casting (casting method), and the like. Note that, from the standpoints of good uniformity of film thickness and surface smoothness, the solution casting method is preferred. From the standpoints of productivity and cost, the melt forming method is preferred.

In a solution casting method, the cyclic olefin resin is dissolved or dispersed in an appropriate solvent to form a resin solution of appropriate concentration, the solution is poured or applied on an appropriate substrate and then dried, and the resultant resin film is released from the substrate.

The substrates used in the solution casting method include: a metal drum, steel belt, polyester film (polyethylene terephthalate (PET) or polyethylene naphthalate (PEN)), polytetrafluoroethylene belt, and the like.

When a polyester film is used as the substrate, the film may be surface treated. Surface treatment methods include general hydrophilization treatment methods, for example, a method in which an acrylic resin or a resin having a sulfonate group is laminated on the surface by coating or laminating technique, or in which the hydrophilicity of the film surface is improved by plasma processing, corona discharge processing, or the like.

The concentration of the resin component in the above mentioned resin solution is normally 0.1 to 90% by weight, preferably is 1 to 50% by weight, and more preferably is 5 to 35% by weight. When the concentration of the resin component is below the above mentioned range, there are instances that the resin film does not have sufficient thickness, and surface smoothness of the resin film is bad due to bubbles and the like produced along with solvent evaporation. When the concentration of the resin component exceeds the above mentioned range, the viscosity of the resin solution is excessively high, and there are instances that the resin film obtained is not uniform in thickness or surface properties.

The viscosity of the resin solution at room temperature is normally 1 to 1,000,000 mPa·s, preferably 10 to 100,000 mPa·s, more preferably 100 to 50, 000 mPa·s, and particularly preferably 1,000 to 40,000 mPa·s.

The solvents used for the preparation of the resin solution in the case of the cyclic olefin resin include: aromatic solvents such as benzene, toluene, xylene, and the like; cellosolve solvents such as methyl cellosolve, ethyl cellosolve, 1-methoxy-2-propanol, and the like; ketone solvents such as diacetone alcohol, acetone, cyclohexanone, methyl ethyl ketone, 4-methyl-2-pentanone, cyclohexanone, ethylcyclohexanone, 1,2-dimethylcyclohexane, and the like; ester solvents such as methyl lactate, ethyl lactate, and the like; halogen-containing solvents such as 2,2,3,3-tetrafluoro-1-propanol, methylene chloride, chloroform, and the like; ether solvents such as tetrahydrofuran, dioxane, and the like; and alcohol solvents such as 1-pentanol, 1-butanol, and the like. The solvents may be used singly or in combination of two or more kinds.

Methods which can be used for applying the resin solution on the substrate include use of a die, coater, brush, or the like, spraying, roll coating, spin coating, dipping, gravure printing, and the like. The application of the resin solution may be repeated in order to obtain the optical film in a desired thickness.

No particular limitation is placed on the method for evaporating the solvent from the resin solution applied on the substrate, and a general method may be used. For example, the coated substrate may be passed through a drying furnace by means of multiple rollers. There are instances that characteristics of the optical film may be markedly deteriorated when bubbles are produced by the evaporation of solvent. Therefore, in order to avoid bubbles, the processing to evaporate the solvent is preferably performed through multiple steps, and the temperature and air flow rate are preferably controlled in each step.

The amount of residual solvent in the resin film is normally not more than 20% by weight, preferably is not more than 5% by weight, more preferably is not more than 1% by weight, and particularly preferably is not more than 0.5% by weight. When the amount of residual solvent exceeds the above mentioned range, there are instances that the resin film greatly changes its size with time during use of the film, and there are instances that the glass transition temperature may be lowered due to the residual solvent, and thus the heat resistance may be lowered.

In order to suitably perform the stretching step as will be described later, it may be necessary that the amount of residual solvent in the resin film is adjusted appropriately within the above mentioned range. Specifically, in order that the stretching may develop the retardation stably and uniformly, the amount of residual solvent may be adjusted to 20 to 0.1% by weight, preferably 5 to 0.1% by weight, and more preferably 1 to 0.1% by weight. By controlling the amount of solvent to such a range, stretching can be readily performed and the retardation can be readily controlled.

After the resin film is stretched with the amount of residual solvent controlled within the above mentioned range, the amount of residual solvent may be reduced by a further drying step to stabilize optical characteristics such as retardation. In this case, the amount of residual solvent is preferably reduced to 5 to 0.1% by weight and more preferably 1 to 0.1% by weight.

The thickness of the resin film obtained in this manner is normally 0.1 to 3,000 µm, preferably is 0.1 to 1,000 µm, more preferably is 1 to 500 µm, and particularly preferably is 5 to 300 µm. When the thickness is smaller than the above mentioned range, handling of the resin film is difficult in practice. On the other hand, when the thickness exceeds the above mentioned range, winding the resin film into a roll shape is difficult.

The thickness distribution of the above mentioned resin film is normally within ±20% of the average value, preferably is within ±10%, more preferably is within ±5%, and particularly preferably is within ±3%. Also the variance ratio of thickness per 1 cm is normally not more than 10%, preferably is not more than 5%, more preferably is not more than 1%, and particularly preferably is not more than 0.5%. When such thickness conditions are satisfied, the resin film obtained by stretching will not have uneven retardation of transmitted light.

### <Stretching Processing>

The non-stretched resin film obtained in the above described manner may be stretched by known methods to achieve the above mentioned optical characteristics. The stretching methods include free-end uniaxial stretching, and fixed-width uniaxial stretching or biaxial stretching.

In the case of uniaxial stretching, the elongation rate is normally 1 to 5,000% per minute, preferably is 50 to 1,000% per minute, and more preferably is 100 to 1,000% per minute.

In the case of biaxial stretching, the film may be stretched in two directions simultaneously, or the film may be uniaxially stretched and thereafter stretched in another direction. In this case, the angle of intersection of the two axes is determined according to the characteristics required for the target optical film and this angle of intersection is not particularly limited. However, this angle of intersection is normally in the range of 120° to 60°. Moreover, the elongation rate in the respective stretching directions may be the same or different, and this elongation rate is normally 1 to 5,000% per minute, preferably is 50 to 1,000% per minute, more preferably is 100 to 1,000 %/minute, and particularly preferably is 100 to 500% per minute.

No particular limitation is placed on the stretching processing temperature, and this temperature is in the range of Tg ± 30°C, preferably is Tg ± 15°C, and more preferably is Tg - 5°C to Tg + 15°C relative to the glass transition temperature Tg of the resin film. Setting the stretching processing temperature within the above mentioned range is preferred since the generation of uneven retardations in the oriented film can be controlled, and the control of refractive index of the respective components is easy.

No particular limitation is placed on the draw ratio. The draw ratio is determined according to the characteristics required for the target optical film and is normally 1.01 to 10 times, preferably is 1.03 to 5 times, and more preferably is 1.03 to 3 times. When the draw ratio exceeds the above mentioned range, there are instances that the control of retardation of the stretched film may be difficult. The stretched film may be cooled without further processing. The stretched film is preferably cooled after exposed to an environment in which the temperature is Tg - 20°C to Tg of the resin film, for at least 10 seconds, preferably 30 seconds to 60 minutes, and more preferably 1 to 60 minutes. With such treatment, the retardation film is stable with little over-time changes of retardation of transmitted light.

The film that is stretched as described above will give retardation to transmitted light as a result of the orientation of molecules by the stretching. This retardation can be controlled by the draw ratio, stretching temperature, film thickness, and the like.

### <Application>

The optical film of the present invention has the above mentioned optical characteristics and has an excellent viewing angle compensation effect. Thus, the optical film of the present invention is suitable for use as a viewing angle compensation film for liquid crystal display devices and particularly for IPS mode liquid crystal display devices. In addition to use as viewing angle compensation films, the optical film can also be used in a liquid crystal display device as part of a light-focusing film or a brightness improving film. Further applications of the optical film include various liquid crystal display elements in cellular phones, digital data terminals, pagers, navigation devices, automotive liquid crystal displays, liquid crystal monitors, dimmer panels, displays for office automation equipment, displays for audio-visual equipment, and the like; and electroluminescent display elements, electron field emission display (FED) elements and touch panels. The optical film of the present invention is also useful as a wavelength plate used for an optical disc recording and playback device for CD, CD-R, MD, MO, DVD, and the like.

### <Polarizing Plate>

The polarizing plate according to the present invention has the above mentioned optical film of the present invention laminated on one face or both faces of a polarizer (polarizing film). To produce such laminate, the polarizer and the optical film may be attached together directly through an appropriate adhesive or bonding agent, or the optical film may be attached to the polarizer laminated with a protective film. In consideration of cost and the like, direct lamination of the optical film to the polarizer is preferred.

No particular limitation is placed on the above mentioned polarizer (polarizing film), and there can be used a stretched film of a polyvinyl alcohol resin such as polyvinyl alcohol (PVA) , polyvinyl formal or polyvinyl acetal which contains a polarizing component such as iodine or a dichromatic dye.

No particular limitation is placed on the above mentioned protective film and there can be used a polymer film with excellent transparency, mechanical strength, and thermal stability, with examples including cellulose films such as triacetyl cellulose (TAC) and the like, polyester films, polycarbonate films, polyether sulfone films, polyamide films, polyimide films, polyolefin films and the like.

No particular limitation is placed on the adhesive or bonding agent used when the protective film is laminated on the polarizer. There can be used an adhesive or bonding agent formed of, for example, an acrylic polymer or a vinyl alcohol polymer. When a PVA film is used as the polarizer, the use of PVA adhesive is particularly preferred from the standpoint of adhesion.

No particular limitation is placed on the adhesive or bonding agent used when the optical film is directly laminated on the polarizer. There can be used an aqueous adhesive that is an aqueous dispersion of, for example, an acrylate ester polymer or the like. Use of such aqueous adhesive is preferred from the standpoints of further improvement of adhesion and excellent durability and stability. Further, no particular limitation is placed on the adhesive or bonding agent used when the optical film is laminated on the polarizer laminated with the protective film, and the adhesives and bonding agents as described above can be used as appropriate.

The polarizing plate of the present invention has an excellent viewing angle compensation effect. By arranging this polarizing plate on one face or both faces of a liquid crystal cell of an IPS mode liquid crystal display device, it is possible to prevent light leakage and color fade (discoloration) during black display, and it is also possible to obtain a high contrast ratio. The polarizing plate of the present invention has a wide range of use because it hardly changes its characteristics even when used for a long term under high temperature conditions.

### [Examples]

Although the present invention will be explained more specifically by presenting Examples below, the present invention is not limited to the following Examples as long as the gist of the present invention is not exceeded. Note that, "parts" and "%" as below, unless otherwise indicated, refer to "parts by weight" and "% by weight", respectively.

Methods of measuring various values in the present invention are shown below.

### [Glass Transition Temperature (Tg)]

Using a differential scanning calorimeter (DSC) manufactured by Seiko Instruments Inc., the glass transition temperature was measured under a nitrogen atmosphere at a rate of temperature increase of 20°C/minute.

### [Saturated Moisture Absorption]

The saturated water absorption was measured in accordance with ASTM D570 by immersing a sample in 23°C water for one week and then measuring the change of weight before and after the immersion.

### [Total Light Transmittance, Haze]

These values were measured using a haze meter (model HGM-2DP) manufactured by Suga Test Instruments Co., Ltd.

### [Retardation of Transmitted Light]

The retardation was measured using KOBRA-21ADH manufactured by Oji Scientific Instruments Co., Ltd. The retardation of the optical anisotropic layer b alone was determined as the difference between the retardation of the laminated optical film and the retardation of the film a. However, when the optical film included the thin film layer c and/or the adhesive film layer d, the "retardation of the film a" was taken to mean the retardation of the laminated film including the film a and the above mentioned layer(s).

### [Thickness of Optical Anisotropic Layer b]

Reflectivity of the optical film was measured using FE-3000 manufactured by Otsuka Electronics Co., Ltd. The thickness was calculated by fitting the actual measured reflectivity to the calculated reflectivity calculated from the thickness and the average refractive index of the optical anisotropic layer b and the film a.

### [Luminance, Viewing Angle, and Contrast Ratio]

Luminance meter LS-110 manufactured by Minolta Co., Ltd. was used. The luminance, viewing angle, and contrast ratio of a liquid crystal panel were measured in a dark room.

### [Residual Solvent Content]

A sample was dissolved in a good solvent other than the solvent actually used, and the thus obtained solution was analyzed by gas chromatography (GC-7A, manufactured by Shimadzu Corporation).

### [Inherent Viscosity]

The inherent viscosity was measured in chloroform, cyclohexane, or N-methyl-2-pyrrolidone (sample concentration: 0.5 g/dL) at 30°C using an Ubbelohde viscometer.

### <Synthesis Example 1>

A nitrogen-purged reaction vessel was charged with 250 parts of 8-methyl-8-methoxycarbonyltetracyclo [4.4.0.1^{2,5}.1^{7,10}]-3-dodecene (specific monomer), 18 parts of 1-hexene (molecular weight modifier), and 750 parts of toluene (solvent for ring-opening polymerization reaction). This solution was heated to 60°C. Thereafter, 0.62 part of a toluene solution of triethyl aluminum (1.5 mol/L) as the polymerization catalyst and 3.7 parts of a toluene solution (concentration = 0. 05 mol/L) of tungsten hexachloride modified with t-butanol and methanol (t-butanol : methanol : tungsten = 0.35 mol : 0.3 mol : 1 mol) were added to the solution. The resultant solution was heated at 80°C under agitation for 3 hours to bring about ring-opening polymerization. Thus, a ring-opening polymer solution was obtained. The polymer conversion in this polymerization reaction was 97%, and the thus obtained ring-opening polymer had an inherent viscosity of 0.75 dL/g when measured in chloroform at 30°C.

Then 1,000 parts of the ring-opening polymer solution was loaded in an autoclave, 0.12 part of RuHCl (CO) [P(C₆H₅)₃]₃ was added to this ring-opening polymer solution, and a hydrogenation reaction was performed through heating and agitation for three hours at a reaction temperature of 165°C and at a hydrogen gas pressure of 100 kg/cm².

After the thus obtained reaction solution (hydrogenated polymer solution) was cooled, the hydrogen gas was released. This reaction solution was poured into a large quantity of methanol, and the resultant precipitates were separated and recovered. These solids were dried to yield a hydrogenated polymer (referred to hereinafter as "resin A1").

With respect to the resin A1:
The hydrogenation ratio measured by ¹H-NMR was 99.9%.
The glass transition temperature (Tg) measured by DSC was 165°C.
The GPC method (columns (four columns in series, manufactured by Tosoh Corp.) = TSKgel G7000H_{XL} × 1, TSKgel GMH_{XL} × 2, and TSKgel G2000H_{XL} × 1, solvent: tetrahydrofuran) determined that the polystyrene equivalent number average molecular weight (Mn) was 32,000, the polystyrene equivalent weight average molecular weight (Mw) was 137,000, and the molecular weight distribution (Mw/Mn) was 4.29.
The saturated water absorption at 23°C was 0.3%.
The SP value measured was 19 (MPa^{1/2}).
The inherent viscosity in chloroform at 30°C was 0.78 dL/g.

### <Synthesis Example 2>

A hydrogenated polymer (referred to hereinafter as "resin A2") was obtained in the same manner as that of Synthesis Example 1 except for the use of 215 parts of 8-methyl-8-methoxycarbonyltetracyclo [4.4.0.1^{2,5}.1^{7,10}]-3-dodecene, 35 parts of bicyclo [2.2.1]hept-2-ene, and 18 parts of 1-hexene (molecular weight modifier).

Measurements for the obtained resin A2 were as follows:
The hydrogenation ratio was 99.9%.
The glass transition temperature (Tg) measured by DSC was 125°C.
   The polystyrene equivalent Mn measured using the GPC method (columns and solvent same as in Synthesis Example 1) was 46,000, Mw was 190,000, and molecular weight distribution (Mw/Mn) was 4.15.
The saturated water absorption at 23°C was 0.18%.
The SP value was 19 (MPa^{1/2}).
The inherent viscosity in chloroform at 30°C was 0.69 dL/g.
The gel content was 0.2%.

### <Synthesis Example 3>

A hydrogenated polymer (referred to hereinafter as "resin A3") was obtained in the same manner as that of Synthesis Example 1 except for the use of 53 parts of tetracyclo [4.4.0.1^{2,5}.1^{7,10}]-3-dodecene, 46 parts of 8-ethylidenetetracyclo [4.4.0.1^{2,5}.1^{7,10}]-3-dodecene, 66 parts of tricyclo [4.3.0.1^{2,5}]-deca-3,7-diene, and 18 parts of 1-hexene (molecular weight modifier) and the use of cyclohexane in place of toluene as the solvent for ring-opening polymerization reaction.

Measurements for the obtained resin A3 were as follows:
The hydrogenation ratio was 99.9%.
The glass transition temperature (Tg) measured by DSC was 137°C.
   The polystyrene equivalent Mn measured using the GPC method (columns and solvent same as in Synthesis Example 1) was 39,000, Mw was 158,000, and molecular weight distribution (Mw/Mn) was 4.05.
The saturated water absorption at 23°C was 0.01%.
The SP value was 17 (MPa^{1/2}).
The inherent viscosity in chloroform at 30°C was 0.70 dL/g.
The gel content was 0.2%.

### <Production Example 1>

### Production of Resin Film (a1-1)

The above mentioned resin A1 was dissolved in toluene to a concentration of 30% (solution viscosity at room temperature was 30,000 mPa·s). Then pentaerythrityl tetrakis [3-(3,5-di-t-butyl-4-hydroxyphenyl) propionate] as anti-oxidizing agent was added in an amount of 0.1 weight part per 100 weight parts of the resin. A sintered metal fiber filter having a 5 µm pore size (manufactured by Nihon Pall Ltd.) was used for filtration. The solution was filtered while controlling the flow rate of the solution such that the pressure differential was not more than 0.4 MPa. INVEX® lab coater (manufactured by Inoue Metalworking Industry Co., Ltd.) installed in a class 1000 clean room was then used to apply the solution to a 100 µm thick PET film (LUMIRROR® U94, manufactured by Toray Industries, Inc.), which had been subjected to hydrophilic surface treatment with an acrylic acid agent (to improve the adhesion). The amount of the solution applied was such that the dry thickness would be 100 µm. The coating film was then subjected to primary drying at 50°C and then secondary drying at 90°C. The PET film was removed, and a resin film (a1-1) was obtained. The residual solvent content of the thus-obtained film was 0.5%, and the total light transmittance was 93%.

### <Production Example 2>

### Production of Resin Film (a2-1)

Except for use of the resin A2 in place of the resin A1, a resin film (a2-1) of 100 µm thickness was obtained in the same manner as that in Production Example 1. The residual solvent content of the thus-obtained film was 0.5%, and the total light transmittance was 93%.

### <Production Example 3>

### Production of Resin Film (a3-1)

Except for use of the resin A3 in place of the resin A1, and except for use of cyclohexane in place of toluene, a resin film (a3-1) of 150 µm thickness was obtained in the same manner as that in Production Example 1. The residual solvent content of the thus-obtained film was 0.5%, and the total light transmittance was 93%.

### <Production Example 4>

### Production of Stretched Film (a1-2)

The resin film (a1-1) was stretched 1.22 times in one direction at 180°C to give a stretched film (a1-2) of 92 µm thickness. Rₐ of the thus-obtained stretched film (a1-2) was 130 nm, and Rₐth was 68 nm.

### <Production Example 5>

### Production of Stretched Film (a2-2)

The resin film (a2-1) was stretched 1.10 times in one direction at 133°C to give a stretched film (a2-2) of 96 µm thickness. Rₐ of the thus-obtained stretched film (a2-2) was 108 nm, and Rₐth was 72 nm.

### <Production Example 6>

### Production of Stretched Film (a3-2)

The resin film (a3-1) was stretched 1.15 times in one direction at 145°C to give a stretched film (a3-2) of 142 µm thickness. Rₐ of the thus-obtained stretched film (a3-2) was 158 nm, and Rₐth was 104 nm.

### <Production Example 7>

### Production of Film (a1-3) Having Thin Film Layer

A wire bar having a gap of 12 µm was used to coat the stretched film (a1-2) with a composition that included a UV curable resin (DESOLITE® Z7524, manufactured by JSR Corp.) diluted in methyl ethyl ketone to a solid concentration of 50% by weight. The solvent was evaporated by heating at 80°C for three minutes. Thereafter, the coated face side was irradiated with ultraviolet radiation at 900 mJ/cm² using a mercury lamp. Thus, a film (a1-3) having a thin film layer was obtained.

### <Production Example 8>

### Production of Film (a2-3) Having Thin Film Layer

Except for use of the stretched film (a2-2) in place of the stretched film (a1-2), the procedures of Production Example 7 were repeated to produce a film (a2-3) having a thin film layer.

### <Production Example 9>

### Production of Film (a3-3) Having Thin Film Layer

Except for use of the stretched film (a3-2) in place of the stretched film (a1-2), the procedures of Production Example 7 were repeated to produce a film (a3-3) having a thin film layer.

### <Production Example 10>

### Production of Film (a1-4) Having Thin Film Layer

Except for use of the resin film (a1-1) in place of the stretched film (a1-2), the procedures of Production Example 7 were repeated to produce a film (a1-4) having a thin film layer.

### <Production Example 11>

### Production of Film (a1-5) Having Thin Film Layer

A wire bar having a gap of 12 µm was used to coat the stretched film (a1-2) with a composition that included a polyether polyurethane material (HYDRAN® WLS-201, manufactured by Dainippon Ink and Chemicals, Inc.) diluted in methyl ethyl ketone to a solid concentration of 3% by weight. The solvent was evaporated by heating at 80°C for 5 minutes. Thus, a film (a1-5) having a thin film layer was obtained.

### [Example 1]

A wire bar having a gap of 3 µm was used to apply a liquid crystal composition (RMS 03-015, manufactured by Merck KGaA, xylene solution) to the thin film layer of the film (a1-3), and then the coating film was dried by heating at 80°C for 2 minutes. Thereafter, the liquid crystal composition-coated side was irradiated with ultraviolet radiation at 900 mJ/cm² using a mercury lamp. Thus, a laminated optical film (1) was obtained which included the film (a1-3) having the thin film layer, and an optical anisotropic layer (b1) formed of the liquid crystal cured layer. The obtained optical film (1) had an optical anisotropic layer (b1) thickness of 0.08 µm and a total light transmittance of 91%.

### [Example 2]

Except for use of the film (a2-3) having a thin film layer in place of the film (a1-3) having a thin film layer, and except for use of a wire bar having a gap of 12 µm, the procedures of Example 1 were repeated to produce a laminated optical film (2) which included the film (a2-3) having a thin film layer, and an optical anisotropic layer (b2) formed of the liquid crystal cured layer. The obtained optical film (2) had an optical anisotropic layer (b2) thickness of 0.41 µm and a total light transmittance of 90%.

### [Example 3]

Except for use of the film (a3-3) having a thin film layer in place of the film (a1-3) having a thin film layer, the procedures of Example 1 were repeated to produce a laminated optical film (3) which included the film (a3-3) having a thin film layer, and an optical anisotropic layer (b3) formed of the liquid crystal cured layer. The obtained optical film (3) had an optical anisotropic layer (b3) thickness of 0.13 µm and a total light transmittance of 91%.

### [Example 4]

Except for use of the film (a1-4) having a thin film layer in place of the film (a1-3) having a thin film layer, and except for use of a wire bar having a gap of 12 µm, the procedures of Example 1 were repeated to produce a laminated optical film (4) which included the film (a1-4) having a thin film layer, and an optical anisotropic layer (b4) formed of the liquid crystal cured layer. The obtained optical film (4) had an optical anisotropic layer (b4) thickness of 0.3 µm and a total light transmittance of 91%.

### [Example 5]

Except for use of the film (a1-5) having a thin film layer in place of the film (a1-3) having a thin film layer, the procedures of Example 1 were repeated to produce a laminated optical film (5) which included the film (a1-5) having a thin film layer, and an optical anisotropic layer (b5) formed of the liquid crystal cured layer. The obtained optical film (5) had an optical anisotropic layer (b5) thickness of 0.10 µm and a total light transmittance of 91%.

### [Example 6]

Except for use of the stretched film (a1-2) in place of the film (a1-3) having a thin film layer, except for use of a wire bar having a gap of 12 µm, and except for the substitution of cyclohexanone for the solvent of the liquid crystal composition RMS03-015 (manufactured by Merck KGaA, xylene solution), the procedures of Example 1 were repeated to produce a laminated optical film (6) which included the stretched film (a1-2) and an optical anisotropic layer (b6) formed of the liquid crystal cured layer. The obtained optical film (6) had an optical anisotropic layer (b6) thickness of 0.18 µm and a total light transmittance of 91%.

### [Example 7]

Except for use of a PET film of 100 µm thickness (LUMIRROR® U94, manufactured by Toray Industries, Inc.) in place of the film (a1-3) having a thin film layer, and except for use of a wire bar having a gap of 12 µm, the procedures of Example 1 were repeated to produce a laminated film consisting of an optical anisotropic layer (b7) formed of the liquid crystal cured layer on the PET film. One face of an acrylic adhesive film (CS9621, manufactured by Nitto Denko Corp.) was attached to the face of the optical anisotropic layer (b7) of this laminated film. The other face of the adhesive film was attached to the stretched film (a1-2). Thereafter, the PET film was peeled off, and a laminated optical film (7) was obtained which included the stretched film (a1-2), the acrylic adhesive film and the optical anisotropic layer (b7) . The obtained optical film (7) had an optical anisotropic layer (b7) thickness of 0.45 µm and a total light transmittance of 92%.

Optical characteristics and film thicknesses of the optical films obtained in Examples 1 to 7 are shown in Table 1. Note that the optical characteristics of the films a of Examples 1 to 5 are optical characteristics of the film and the thin film layer in combination.

[Table 1]

**Table 1**

| | | Type | Thickness (µm) | R (nm) | Rth (nm) | NZ |
|---|---|---|---|---|---|---|
| Example 1 | film a | (a1-3) | 97 | 130.9 | 70 | 1.0 |
| | optical anisotropic layer b | (b1) | 0.08 | 0.2 | -39 | -- |
| | optical film | (1) | 97 | 131.1 | 31 | 0.7 |
| Example 2 | film a | (a2-3) | 101 | 108.0 | 74 | 1.2 |
| | optical anisotropic layer b | (b2) | 0.41 | 0.3 | -122 | -- |
| | optical film | (2) | 101 | 108.3 | -48 | 0.1 |
| Example 3 | film a | (a3-3) | 147 | 157.7 | 106 | 1.2 |
| | optical anisotropic layer b | (b3) | 0.13 | 0.1 | -71 | -- |
| | optical film | (3) | 147 | 157.8 | 35 | 0.7 |
| Example 4 | film a | (a1-4) | 105 | 6.1 | 31 | 5.7 |
| | optical anisotropic layer b | (b4) | 0.30 | 0.2 | -105 | -- |
| | optical film | (4) | 105 | 6.3 | -74 | -12 |
| Example 5 | film a | (a1-5) | 92 | 130.7 | 70 | 1.0 |
| | optical anisotropic layer b | (b5) | 0.10 | -0.1 | -57 | -- |
| | optical film | (5) | 92 | 130.6 | 13 | 0.6 |
| Example 6 | film a | (a1-2) | 92 | 130.2 | 68 | 1.0 |
| | optical anisotropic layer b | (b6) | 0.18 | 0.1 | -90 | -- |
| | optical film | (6) | 92 | 130.3 | -22 | 0.3 |
| Example 7 | film a | (a1-2) + adhesive film | 117 | 130.5 | 71 | 1.0 |
| | optical anisotropic layer b | (b7) | 0.45 | 0.3 | -143 | -- |
| | optical film | (7) | 117 | 130.8 | -72 | 0.0 |

Among the above results, see for example Example 2. The laminated optical film (2) had a film in-plane retardation of 108 nm. The film (a2-3) having the thin film layer itself had an in-plane retardation of 108 nm, and therefore there was no difference between these values. The retardation of the optical film (2) decreased with increasing tilt angle when the retardation was measured while the film was tilted from normal axis of the film. The Rth was calculated to be negative, and it was found that the refractive index in the thickness direction (i.e., nz) was relatively high. Based on these facts, the optical anisotropic layer (b2) had no film in-plane retardation, and had a high refractive index in the thickness direction (nz > nx ≈ ny), meaning that the layer was a so-called positive C plate. This also meant that the optical anisotropic layer (b2) was homeotropically oriented.

The above results also showed that optical characteristics of the optical films of the present invention can be controlled in a wide range by selection of the thickness and degree of elongation of the cyclic olefin type film a and the thickness of the optical anisotropic layer b.

### <Preparation Example of Aqueous type adhesive>

A reactor vessel was charged with 250 parts of distilled water, and 90 parts of butyl acrylate, 8 parts of 2-hydroxyethyl methacrylate, 2 parts of divinyl benzene, and 0.1 part of potassium oleate were added to this reactor vessel. This mixture was subjected to dispersion treatment using a TEFLON® agitator impeller. After the interior of this reactor vessel was purged with nitrogen, the solution was heated up to 50°C, and 0.2 part of potassium persulfate was added to initiate polymerization. After the passage of 2 hours, 0.1 part of potassium persulfate was further added, then the system was heated up to 80°C, and the polymerization reaction was continued for 1 hour to afford a polymer dispersion liquid. Thereafter, the polymer dispersion liquid was concentrated to a solid concentration of 70% by means of an evaporator. Thus, an aqueous adhesive (adhesive having a polar group) that was an aqueous dispersion of an acrylate ester polymer was obtained.

The GPC method (columns and solvent same as in Synthesis Example 1) determined that the acrylate ester polymer of the aqueous adhesive had a polystyrene equivalent number average molecular weight (Mn) of 69,000 and weight average molecular weight (Mw) of 135,000. The inherent viscosity in chloroform at 30°C was 1.2 dL/g.

### [Example 8]

A polyvinyl alcohol film (referred to hereinafter as "PVA") was pre-stretched at a 3-fold elongation in a dye bath (30°C aqueous solution having iodine concentration of 0.03% by weight and potassium iodide concentration of 0.5% by weight). Thereafter, the film was post-stretched at a 2-fold elongation in a cross-linking bath (55°C aqueous solution having boric acid concentration of 5% by weight and potassium iodide concentration of 8% by weight). The film was dried to form a polarizer.

With use of a wire bar having a gap of 12 µm, a composition of a polyether polyurethane material (HYDRAN® WLS-201, manufactured by Dainippon Ink and Chemicals, Inc., diluted to 3% by weight with methyl ethyl ketone) was applied on the side opposite to the liquid crystal cured layer of the optical film (1). The coating was dried by heating at 80°C for 5 minutes. Thus, an optical film (5) having a polyurethane thin film layer was obtained.

Subsequently, one face of the polarizer and the polyurethane thin film layer face of the optical film (5) were attached together with the above mentioned aqueous adhesive such that the transmission axis of the polarizer and the axis of stretching direction of the optical film (5) were parallel to each other. On the other face of the polarizer, a triacetyl cellulose (referred to hereinafter as "TAC") film was attached through a PVA adhesive to produce a polarizing plate (1). The transmittance of the thus-obtained polarizing plate (1) was 43.0%, and the degree of polarization was 99.8%.

Separately, TAC films were attached to both faces of the polarizer with a PVA adhesive to produce a polarizing plate (2) which did not have any retardation film.

Characteristics of the polarizing plate (1) were evaluated as follows. The polarizing plate and retardation film attached to both surfaces of a liquid crystal panel of liquid crystal television with IPS mode liquid crystal (CR-L17SC, manufactured by LG Electronics Corp.) were removed. The polarizing plate (1) was attached to the front face of the liquid crystal panel (viewer side) such that the retardation film (optical film (5)) of the polarizing plate (1) was on the liquid crystal cell side. Further, the polarizing plate (2) was attached to the rear face (opposite to the viewer) of the liquid crystal panel such that the transmission axis was perpendicular to the transmission axis of the polarizing plate (1).

When the liquid crystal television having this polarizing plate (1) was checked for contrast ratio at an azimuthal angle of 45° and a polar angle of 60°, the contrast ratio was high (= 55). The viewing angle (region with a contrast ratio of not less than 10) was measured to be not less than 170° in all directions (vertical, lateral, and oblique directions).

The durability was tested by exposing the polarizing plate (1) to an environment of 100°C or an environment of 60°C and 90% RH, for 1,000 hours. The degree of polarization was examined. The change in degree of polarization [= ((before change) - (after change)) × 100/(before change)] in both cases was found to be within 5%.

### [Comparative Example]

Stretching was performed in the same manner as Production Example 6 except for the use of a TAC film in place of the resin film (a1-1). A thin film layer was formed in the same manner as Production Example 7. An optical anisotropic layer was laminated in the same manner as Example 1. A polarizing plate (3) was obtained in the same manner as Example 8. The transmittance of the polarizing plate (3) was 43.0%, and the degree of polarization was 99.8%.

The polarizing plate (3) in place of the polarizing plate (1) was attached to a liquid crystal television in the same manner as Example 5, and the polarizing plate (2) was attached to the opposite face in the same manner as Example 5. When the liquid crystal television having this polarizing plate (3) was checked for contrast ratio at an azimuthal angle of 45° and a polar angle of 60°, the contrast ratio was 50. The viewing angle (region with a contrast ratio of not less than 10) was measured to be not less than 170° in all directions (vertical, lateral, and oblique angles).

The durability was tested by exposing the polarizing plate (3) to an environment of 100°C or an environment of 60°C and 90% RH, for 1,000 hours. The degree of polarization was examined. The change in degree of polarization in both cases was found to be 10% or above.

## Claims

1. An optical film comprising a film a comprising a cyclic olefin type resin and an optical anisotropic layer b having homeotropic orientation provided on the film a.

2. The optical film according to claim 1, which satisfies the below listed formulae (1) to (3):
(1) -600 nm≦Rth≦ 200 nm
(2) 0 nm≦R≦ 600 nm
(3) NZ≦ 1
(in formulae (1) to (3), Rth indicates the retardation in the thickness direction of the optical film at a wavelength of 550 nm and is expressed by Rth = [(nx + ny) /2 - nz] × d; R indicates the in-plane retardation of the optical film at a wavelength of 550 nm and is expressed by R = (nx - ny) × d; NZ is expressed by (nx - nz) / (nx - ny) ; nx is the film in-plane maximum refractive index; ny is the refractive index in the film in-plane direction perpendicular to nx; nz is the refractive index in the film thickness direction perpendicular to nx and ny; and d is film thickness (nm)).

3. The optical film according to claim 1, wherein
(i) the cyclic olefin type resin (100 mol% total constituent unit basis) contains 30 to 100 mol% of constituent units indicated by the below listed formula (I) and 0 to 70 mol% of constituent units indicated by the below listed formula (II); and
(ii) the thickness of the film a is 10,000 nm to 200,000 nm; 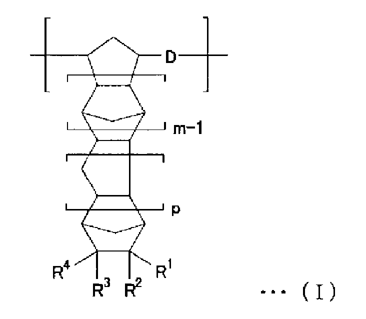
(in formula (I), m is an integer which is 1 or more; p is an integer which is 0 or 1 or more; D indicates a group independently represented by -CH=CH- or -CH₂CH₂-; R¹ to R⁴ each indicate a hydrogen atom, halogen atom, polar group, or a hydrocarbon group (optionally having a coupling group containing an oxygen atom, sulfur atom, nitrogen atom, or silicon atom) which is optionally substituted or not substituted and has 1 to 30 carbon atoms; R¹ and R² and/or R³ and R⁴ may be combined to form a bivalent hydrocarbon group; R¹ or R², and R³ or R⁴ may be mutually bonded to form a carbon ring or a heterocyclic ring; and this carbon ring or heterocyclic ring may have either a monocyclic structure or a polycyclic structure); 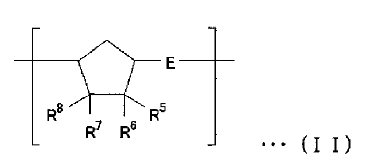 (in formula (II), E indicates a group independently represented by -CH=CH- or -CH₂CH₂-; R⁵ to R⁸ each indicate a hydrogen atom, halogen atom, polar group, or a hydrocarbon group (optionally having a coupling group containing an oxygen atom, sulfur atom, nitrogen atom, or silicon atom) which is optionally substituted or not substituted and has 1 to 30 carbon atoms; R⁵ and R⁶ and/or R⁷ and R⁸ may be combined to form a bivalent hydrocarbon group; R⁵ or R⁶, and R⁷ or R⁸ may be mutually bonded to form a carbon ring or a heterocyclic ring; and this carbon ring or heterocyclic ring may have either a monocyclic structure or a polycyclic structure).

4. The optical film according to claim 1, wherein the film a satisfies the below listed formulae (4) and (5):
(4) 0 nm ≦ Rₐth ≦ 600 nm
(5) 0 nm ≦ Rₐ ≦ 600 nm
(in formulae (4) and (5), Rₐth indicates the retardation in the thickness direction of the film a at a wavelength of 550 nm and is expressed by Rₐth = [(nxₐ + nyₐ) /2 - nzₐ] × dₐ; Rₐ indicates the in-plane retardation of the film a at a wavelength of 550 nm and is expressed by Rₐ = (nxₐ - nyₐ) × dₐ; nxₐ is the film a in-plane maximum refractive index; nyₐ is the refractive index in the film a in-plane direction perpendicular to nxₐ; nzₐ is the refractive index in the film a thickness direction perpendicular to nxₐ and nyₐ; and dₐ is film a thickness (nm)).

5. The optical film according to claim 1, wherein the optical anisotropic layer b satisfies the below listed formulae
(6) and (7) :
(6) -1000 nm ≦ R_{b}th ≦ 0 nm
(7) 0 nm ≦ R_{b} ≦ 50 nm
(in formulae (6) and (7), R_{b}th indicates the retardation in the thickness direction of the optical anisotropic layer b at a wavelength of 550 nm and is expressed by R_{b}th = [(nx_{b} + ny_{b}) /2 - nz_{b}] × d_{b}; R_{b} indicates the in-plane retardation of the optical anisotropic layer b at a wavelength of 550 nm and is expressed by R_{b} = (nx_{b} - ny_{b}) × d_{b}; nx_{b} is the optical anisotropic layer b in-plane maximum refractive index; ny_{b} is the refractive index in the optical anisotropic layer b in-plane direction perpendicular to nx_{b}; nz_{b} is the refractive index in the optical anisotropic layer b thickness direction perpendicular to nx_{b} and ny_{b}; and d_{b} is optical anisotropic layer b thickness (nm)).

6. The optical film according to claim 1, wherein the optical anisotropic layer b is formed by applying a liquid crystal compound on the film a.

7. The optical film according to claim 1, wherein the optical anisotropic layer b is transferred to the film a, and is bonded and laminated thereon through an adhesive film layer d.

8. The optical film according to claim 1, wherein the optical film has a thin film layer c between the film a and the optical anisotropic layer b.

9. A polarizing plate having the optical film of claim 1.

10. A liquid crystal display device having the optical film of claim 1.

11. A liquid crystal display device having the polarizing plate of claim 9.

12. The liquid crystal display device according to claim 10 or 11, wherein the driving method for liquid crystal cells is in-plane switching (IPS) method.
